# EUROPEAN PATENT APPLICATION

(11) **EP 4 804 666 A1**
(43) Date of publication of application: **09.09.2026**
(21) Application number: 23957034.4
(22) Date of filing: 30.10.2023
(51) Int. Cl.: H04W 72/04

(54) **METHOD AND APPARATUS FOR SIDELINK COMMUNICATION**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Fish & Richardson P.C.
(86) International application number: PCT/CN2023/127656
(87) International publication number: WO 2025/091152

(57) **Abstract**

The present application provides a method and device for sidelink communication, which facilitates initial beam pairing between two or more terminal devices in a sidelink communication system based on a sidelink. The method includes: transmitting, by a first terminal device, a first sidelink signal via a first transmitting beam, where the first sidelink signal is used for initial beam pairing or sidelink establishment between the first terminal device and a second terminal device; where the first sidelink signal is associated with first information, and the first information comprises one or more of: ID of the first terminal device; ID of the second terminal device; ID of a terminal device group in which the second terminal device is located; and priority of a communication service between the first terminal device and the second terminal device.

## Description

### TECHNICAL FIELD

The present application relates to the technical field of communication, and more specifically, to a method and device for sidelink communication.

### BACKGROUND

When communicating in high-frequency bands (such as millimeter-wave bands), network devices can achieve system coverage through beam scanning based on large-scale antenna arrays. Beam scanning requires a certain amount of time-frequency resources and has high power consumption. Therefore, network devices and terminal devices determine the optimal transmit-receive beam pair via beam pairing for uplink/downlink transmissions.

**In** sidelink communication systems, how terminal devices perform beam pairing based on the sidelink remains an open issue.

### SUMMARY

The present application provides a method and device for sidelink communication. Various aspects involved in the embodiments of the present application are introduced in the following.

According to a first aspect of the present application, there is provided a method for sidelink communication including: transmitting, by a first terminal device, a first sidelink signal via a first transmitting beam, where the first sidelink signal is used for initial beam pairing or sidelink establishment between the first terminal device and a second terminal device; wherein the first sidelink signal is associated with first information, and the first information comprises one or more of: ID of the first terminal device; ID of the second terminal device; ID of a terminal device group in which the second terminal device is located; and priority of a communication service between the first terminal device and the second terminal device.

According to a second aspect of the present application, there is provided another method for sidelink communication including: receiving, by a second terminal device, a first sidelink signal transmitted by a first terminal device via a first transmitting beam, where the first sidelink signal is used for initial beam pairing or sidelink establishment between the first terminal device and the second terminal device; wherein the first sidelink signal is associated with first information, and the first information comprises one or more of: ID of the first terminal device; ID of the second terminal device; ID of a terminal device group in which the second terminal device is located; and priority of a communication service between the first terminal device and the second terminal device.

According to a third aspect of the present application, there is provided a device for sidelink communication, where the device is a first terminal device, and the first terminal device includes: a transmitting unit, configured to transmit a first sidelink signal via a first transmitting beam, where the first sidelink signal is used for initial beam pairing or sidelink establishment between the first terminal device and a second terminal device; wherein the first sidelink signal is associated with first information, and the first information comprises one or more of: ID of the first terminal device; ID of the second terminal device; ID of a terminal device group in which the second terminal device is located; and priority of a communication service between the first terminal device and the second terminal device.

According to a fourth aspect of the present application, there is provided another device for sidelink communication, where the another device is a second terminal device, and the second terminal device includes: a receiving unit, configured to receive a first sidelink signal transmitted by a first terminal device via a first transmitting beam, where the first sidelink signal is used for initial beam pairing or sidelink establishment between the first terminal device and the second terminal device; wherein the first sidelink signal is associated with first information, and the first information comprises one or more of: ID of the first terminal device; ID of the second terminal device; ID of a terminal device group in which the second terminal device is located; and priority of a communication service between the first terminal device and the second terminal device.

In a fifth aspect, a communication device is provided, which includes a memory and a processor, where the memory is configured to store a program, and the processor is configured to call the program in the memory to implement the method according to the first or second aspect.

In a sixth aspect, a device is provided, which includes a processor for calling a program from a memory to implement the method according to the first or second aspect.

In a seventh aspect, a chip is provided, which includes a processor for calling a program from a memory, such that a device equipped with the chip executes the method according to the first or second aspect.

In an eighth aspect, a computer-readable storage medium is provided, on which a program is stored, where the program enables a computer to implement the method according to the first or second aspect.

In a ninth aspect, a computer program product is provided, comprising a program that enables a computer to implement the method according to the first or second aspect.

In a tenth aspect, a computer program is provided, which enables a computer to implement the method according to the first or second aspect.

In embodiments of the present application, the first terminal device transmits a first sidelink signal via a first transmitting beam. By associating the first sidelink signal with first information, initial beam pairing or sidelink establishment between the first terminal device and the second terminal device can be achieved. The first information can be associated with the identity (ID) of the first terminal device and/or the ID of the second terminal device and/or the ID of the terminal device group, thereby facilitating beam identification between the two terminal devices. The first information can also be associated with service priorities among different terminal devices, thereby facilitating the second terminal device to perform initial beam pairing or sidelink establishment with the transmitting terminal with a higher service priority in a timely manner.

### BRIEF DESCRIPTION OF THE DRAWINGS

Fig. 1 shows a wireless communication system to which embodiments of the present application are applicable.
Fig. 2 shows an example of NR-V2X communication.
Fig. 3 is a schematic diagram of a transmitting terminal and a receiving terminal performing beam scanning respectively.
Fig. 4 is a schematic diagram of beam scanning where multiple transmitting terminal devices correspond to one receiving terminal device.
Fig. 5 is a schematic diagram of a terminal device periodically transmitting beam scanning.
Fig. 6 is a schematic flowchart of a method for sidelink communication provided in the embodiments of the present application.
Fig. 7 is a schematic flowchart of a possible implementation of the method shown in Fig. 6.
Fig. 8 is a schematic diagram of a possible mapping relationship between the transmit beam and the sidelink signal in the method shown in Fig. 6.
Fig. 9 is a schematic block diagram of a device for sidelink communication provided in the embodiments of the present application.
Fig. 10 is a schematic block diagram of another device for sidelink communication provided in the embodiments of the present application.
Fig. 11 is a schematic block diagram of a communication apparatus provided in the embodiments of the present application.

### DETAILED DESCRIPTION OF THE EMBODIMENTS

The technical solutions in the embodiments of the present application are described hereinafter in conjunction with the drawings in the embodiments of the present application. Apparently, the described embodiments are only a part of the embodiments of the present application, rather than all embodiments. For the embodiments described in the present application, all other embodiments obtained by those of ordinary skill in the art without creative efforts fall within the scope of protection of the present application.

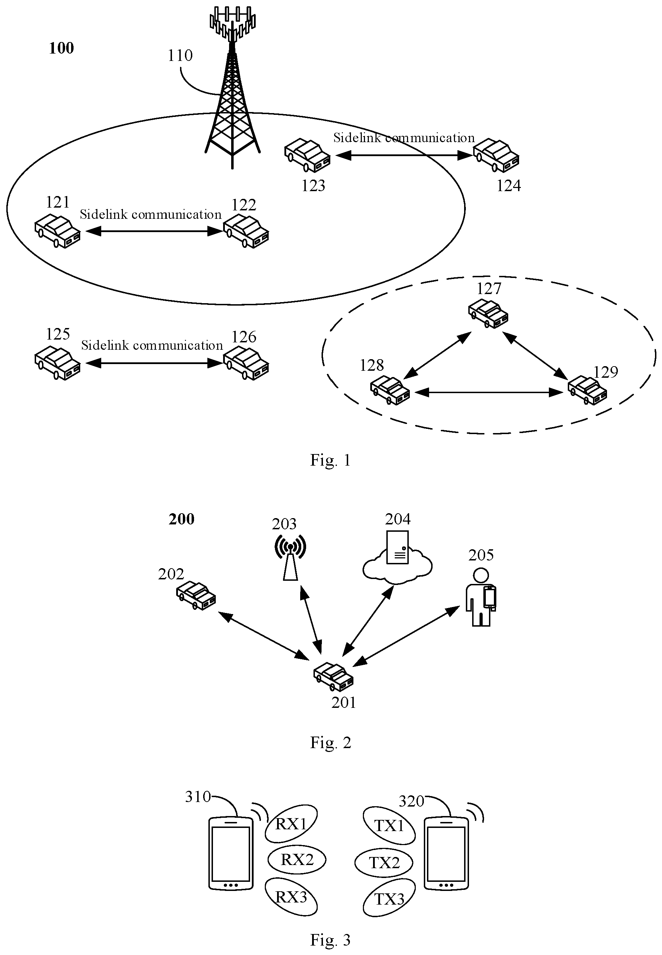

Fig. 1 is a schematic diagram of a system architecture of a wireless communication system 100 to which embodiments of the present application are applicable. The wireless communication system 100 may include a network device 110 and terminal devices 121 to 129. The network device 110 can provide communication coverage for specific geographic areas and can communicate with the terminal devices located within this coverage area.

In some implementations, communication between terminal devices may be achieved through a sidelink (SL). Sidelink communication may also be referred to as proximity services (ProSe) communication, unilateral communication, device-to-device (D2D) communication, etc.

In other words, terminal devices transmit sidelink data between themselves via a sidelink. The sidelink data may include data and/or control signaling. In some implementations, the sidelink data may be, for example, physical sidelink control channel (PSCCH), physical sidelink shared channel (PSSCH), PSCCH demodulation reference signal (DMRS), PSSCH DMRS, physical sidelink feedback channel (PSFCH), and so on.

The following text introduces several common sidelink communication scenarios with reference to Fig. 1. In sidelink communication, scenarios can be categorized into three types based on whether the terminal devices in the sidelink are within the coverage of network devices. Scenario 1: terminal devices perform sidelink communication within the coverage of network devices. Scenario 2: a subset of terminal devices perform sidelink communication within the coverage of network devices. Scenario 3: terminal devices perform sidelink communication outside the coverage of network devices.

As shown in Fig. 1, in Scenario 1, terminal devices 121 and 122 can communicate with each other via the sidelink, and both are within the coverage of a network device 110, or in other words, both terminal devices are under the coverage of the same network device 110. In this scenario, the network device 110 can transmit configuration signaling to the terminal devices 121 and 122. Correspondingly, the terminal devices 121 and 122 communicate with each other via the sidelink based on the configuration signaling.

As shown in Fig. 1, in Scenario 2, terminal devices 123 and 124 can communicate with each other via the sidelink, with the terminal device 123 being within the coverage of the network device 110, and the terminal device 124 being outside the coverage of the network device 110. In this scenario, the terminal device 123 receives the configuration information from the network device 110 and performs communication via the sidelink based on the configuration provided by the configuration signaling. However, for the terminal device 124, as it is located outside the coverage of the network device 110, it cannot receive the configuration information from the network device 110. At this time, the terminal device 124 can obtain the configuration for sidelink communication based on pre-configured information and/or the configuration information transmitted by the terminal device 123 located within the coverage, so as to communicate with the terminal device 123 via the sidelink based on the obtained configuration.

In some cases, the terminal device 123 may transmit the aforementioned configuration information to the terminal device 124 via physical sidelink broadcast channel (PSBCH), in order to configure the terminal device 124 for communication via the sidelink.

As shown in Fig. 1, in Scenario 3, terminal devices 125 to 129 are all located outside the coverage of the network device 110 and cannot communicate with the network device 110. In this scenario, the terminal devices can perform sidelink communication based on pre-configured information.

In some cases, terminal devices 127 to 129 located outside the coverage of the network device may constitute a communication group, and the terminal devices 127 to 129 within the communication group can communicate with each other. In addition, the terminal device 127 within the communication group may serve as the central control node, also referred to as cluster header (CH). Correspondingly, other terminal devices within the communication group may be referred to as "group members".

The terminal device 127, as the CH, may possess one or more of the following functions: establishing the communication group; managing the addition and removal of group members; coordinating resources, including allocating sidelink transmission resources to group members and receiving their sidelink feedback; inter-group resource coordination.

It should be noted that Fig. 1 illustrates one network device and multiple terminal devices by way of example. Optionally, the wireless communication system 100 may include multiple network devices and each network device's coverage may cover other numbers of terminal devices, which is not limited by the embodiments of the present application.

Optionally, the wireless communication system 100 may also include other network entities, such as network controllers and mobility management entities, which is not limited by the embodiments of the present application.

It should be understood that the technical solution of the embodiments of the present application can be applied to various communication systems, such as: the fifth generation (5G) system or new radio (NR) system, long term evolution (LTE) system, LTE frequency division duplex (FDD) system, LTE time division duplex (TDD), etc. The technical solution provided in the present application can also be applied to future communication systems, such as the sixth generation mobile communication system, satellite communication system, and so on.

The terminal device in the embodiments of the present application may also be referred to as user equipment (UE), access terminal, user unit, user station, mobile platform, mobile station (MS), mobile terminal (MT), remote station, remote terminal, mobile device, user terminal, wireless communication device, user agent or user device. The terminal device in the embodiments of the present application may refer to a device that provides voice and/or data connectivity to users, and can be configured to communicate people, objects, and machines, such as handheld devices and vehicle mounted devices with wireless connection functions. The terminal device in the embodiments of the present application may be mobile phones, tablets, laptops, palmtop computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grid, wireless terminals in transportation safety, wireless terminals in smart city, wireless terminals in smart home, etc. Optionally, the terminal device may be configured to act as a base station. For example, the terminal device may act as a scheduling entity that provides sidelink signals between terminal devices in vehicle-to-everything (V2X) or D2D. For example, cellular phones and automobiles can communicate with each other using sidelink data. Cellular phones can communicate with smart home devices without the need to relay communication signals through the base station.

The network device in the embodiments of the present application may be a device configured for communication with the terminal device. The network device may also be referred to as an access network device or a radio access network device. For example, the network device may be a base station. The network device in the embodiments of the present application may refer to a radio access network (RAN) node (or device) that connects a terminal device to a radio network. The base station may broadly cover or be replaced with the following various names, such as: NodeB, evolved NodeB (eNB), next generation NodeB (gNB), relay station, transmitting and receiving point (TRP), transmitting point (TP), access point (AP), master eNB (MeNB), secondary eNB (SeNB), multi-standard radio (MSR) node, home base station, network controller, access node, wireless node, transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, modem, or chip configured to be installed within the aforementioned equipment or devices. The base station may also be a device that performs base station functions in mobile switching centers, D2D communication, V2X communication, machine-to-machine (M2M) communication, a network side device in 6G network, or a device that performs base station functions in future communication systems. The base station can support networks of the same or different access technologies. The embodiments of the present application impose no limitation on the specific technology and device form adopted by the network device.

The base station may be fixed or mobile. For example, a helicopters or drone can be configured to act as a mobile base station, and one or more cells can move according to the location of the mobile base station. In other examples, a helicopter or drone can be configured as a device for communication with another base station.

In some deployments, the network device in the embodiments of the present application may refer to CU or DU, or the network device includes CU and DU. gNB may also include AAU.

The network device and the terminal device may be deployed on land, including indoor or outdoor, handheld or vehicle mounted; may also be deployed on the water surface; and may also be deployed on airplanes, balloons, and satellites in the air. The embodiments of the present embodiment impose no limitation on the scenarios in which the network device and the terminal device are located.

It should be understood that all or part of the functions of the communication devices in the present application can also be implemented through functions of software running on hardware, or through virtualization functions instantiated on platforms (such as cloud platforms).

To facilitate understanding, some relevant technical knowledge related to the embodiments of the present application is firstly introduced. The following related technologies can be freely combined with the technical solutions of the embodiments of the present application as optional solutions, and all these combinations fall within the scope of protection of the embodiments of the present application. The embodiments of the present application include at least some of the following contents.

With the development of wireless communication technology, communication systems are facing increasingly high requirements for data transmission speed, number of connections, and coverage. For example, the 5G mobile standard requires improvements based on higher data transmission speed, greater number of connections, and better coverage, in order to provide each of tens of thousands of users with a data rate of tens of megabits per second.

Certain wireless communication networks (such as 5G or subsequent technological evolutions) can support operations in very high or even extra high frequency (EHF) bands. These high-frequency ranges (FR) include millimeter wave (mmW) bands. Generally, these frequency ranges correspond to wavelengths ranging from 1mm to 10mm, or frequencies ranging from 30GHz to 300GHz. For example, the frequency range corresponding to FR2 in a 5G system is 24.25GHz to 52. 6GHz.

When these high-frequency ranges are utilized for communication, they can support exceptionally high throughput. However, significant propagation loss occurring at high frequencies is one of the challenges for wireless communication at these very high or extremely high frequencies. For example, in the millimeter-wave bands, propagation loss may be severe.

To reduce propagation loss, beam transmission can be achieved using large-scale antenna arrays. The large number of densely distributed antenna elements increases the complexity and cost of digital beamforming, and communication devices typically perform beamforming in the analog domain based on large-scale antenna arrays. The beam generated by analog beamforming points in a specific direction at a particular moment. The communication device performs transmission through beam scanning. Beam scanning is also known as beam sweeping. For example, network devices can transmit data to terminal devices by sweeping a collection of beams focused in different directions. For another example, network devices can achieve system coverage through beam scanning. However, beam scanning requires a certain amount of time-frequency resources and has high power consumption. In other words, the generation and scanning of a set of sweeping beams are relatively expensive in terms of power consumption, time, and air interface resources.

For communication between network devices and terminal devices, when terminal devices are within the coverage of network devices, the optimal transmit-receive beam pair can be determined via beam pairing for uplink/downlink transmissions. Beam pairing may also be referred to as beam alignment or beam correspondence. For example, in communications between network devices and terminal devices based on the Uu communication interface, a three-stage initial beam pairing process may be employed for initial pairing. The three-stage initial beam pairing process includes three procedures: P1, P2, and P3.

For terminal devices in a sidelink communication system, before beam pairing, the terminal devices may not be aware of whether there are any other devices around, or they are uncertain about appropriate transmission occasions for beam sweeping, or they have no prior knowledge of reference signals to receive. Consequently, for terminal devices in a sidelink communication system, establishing beam pairing based on sidelinks remains an unresolved technical challenge. This is exemplified by ongoing research in 3GPP Release 18 (R18), which specifically addresses beam pairing mechanisms for sidelink communications in FR2 to enable subsequent data transmission.

To analyze this issue, the communication mode of the sidelink is firstly briefly explained with reference to Figs. 1 and 2.

With the development of sidelink communication technology, there are more and more scenarios where sidelink communication is applied. Illustratively, automobiles is becoming a new significant driving force for 5G, accompanied by numerous use cases for vehicular mobile communications. For example, multiple V2X scenarios have been proposed in NR. These V2X scenarios include vehicular platooning, advanced driving, extended sensors, remote driving, and so on.

For instance, passengers and users expect high-quality communication connections regardless of their location or speed. In such scenarios, passengers' entertainment activities will demand mobile broadband with high concurrency capacity and high mobility.

Illustratively, another automotive use case is the augmented reality (AR) dashboard, which enables drivers to identify objects in low-light conditions and obtain distance metrics of surrounding obstacles. In addition to objects seen through the front window, drivers can obtain mobility data of objects outside the vehicle through overlaid information communicated with the AR dashboard.

Illustratively, the next stage of development in the automotive field will be the application of remote-controlled or autonomous vehicles. The autonomous vehicles are vehicles that autonomously assume all driving activities, while drivers only focus on traffic anomalies that the vehicles cannot recognize. For example, the safety system can guide alternative routes for driving behavior, so that drivers can drive more safely, thereby reducing the risk of accidents.

No matter what the application scenario is, it will involve information interaction among multiple terminal devices. The wireless module enables communication between vehicles, information exchange between vehicles and supporting infrastructure, as well as information exchange between vehicles and other connected devices (such as pedestrian-carried devices). To ensure traffic safety, the information exchange between terminal devices typically demands ultra-low latency and ultra-high reliability. For example, the communication between autonomous vehicles and the communication between vehicles and infrastructure require extremely high reliability and speed, thereby elevating traffic safety to a level unattainable by humans.

To facilitate understanding, the interaction between various terminal devices will be introduced using a V2X communication system 200 shown in Fig. 2 as an example. Referring to Fig. 2, the vehicle-to-vehicle (V2V) communication between the terminal device 201 and the terminal device 202 involves information exchange between the vehicles themselves. The vehicle-to-infrastructure (V2I) communication, vehicle-to-network (V2N) communication, and vehicle-to-pedestrian (V2P) communication conducted by the terminal device 201 and the terminal devices 203 to 205 involve information exchange between vehicles and external systems.

The gradual expansion of information exchange scope has raised higher requirements for communication systems. For example, communication systems are required to support higher throughput, lower latency, higher reliability, greater coverage, and more flexible resource allocation. Taking the development of V2X as an example, LTE-V2X supports only broadcast mode for sidelink communication between devices. NR-V2X supports three communication modes: broadcast, groupcast, and unicast. Groupcast communication is a type of multicast.

Broadcast is the most basic communication mode in sidelink communication. For the broadcast transmission mode, the terminal device receiving sidelink data can be any terminal device around the terminal device acting as the transmitter. For example, referring to Fig. 1, assuming that the terminal device 125 acts as the transmitter and transmits sidelink data in a broadcast manner, terminal devices 121 to 124 and 126 to 129 located around the terminal device 125 may all act as receivers of the sidelink data.

Groupcast communication is used to support information exchange between terminal devices within a specific group (that is, communication group), facilitating negotiation and decision-making among the terminal devices within the group. Sidelink groupcast is categorized into two transmission types. Type one is for managed groups with stable connection relationships, which have clear ID information and information about the group members. Type two is for connectionless groups formed in a connectionless manner, such as a groupcast dynamically formed based on distance, requiring explicit indication of the communication distance for the current service.

For groupcast transmission, terminal devices receiving the sidelink data may be all the terminal devices within a communication group. Alternatively, terminal devices receiving the sidelink data may be all the terminal devices within a certain transmission distance. For example, referring to Fig. 1, for a communication group comprising terminal devices 127 to 129, when the terminal device 127 transmits sidelink data in a groupcast manner, other terminal devices 128 and 129 within the communication group act as receiving terminals that receive the sidelink data. For another example, referring to Fig. 1, assuming that terminal devices within a predetermined range comprising terminal devices 127 to 129, when the terminal device 127 transmits sidelink data in a groupcast manner, other terminal devices 128 and 129 within the predetermined range act as receiving terminals that receive the sidelink data.

Unicast communication enables sidelink communication between two terminal devices. Taking NR-V2X as an example, reliable communication from terminal device to terminal device can be achieved through radio resource control (RRC) signaling based on the newly defined PC5 interface. Illustratively, two terminal devices can achieve unicast communication by establishing a unicast link. For example, the terminal device may establish a unicast link based on a direct communication request (DCR).

The preceding text introduces various transmission modes in sidelink communication. In beam-based sidelink communication, terminal devices can perform sidelink transmission with other terminal devices based on beams. For example, two terminal devices may establish communication via transmitting and receiving beams. Beam communication between terminal devices is briefly introduced below with reference to Fig. 3.

Referring to Fig. 3, the terminal device 310 receives data (receive, RX) via three receiving beams, while the terminal device 320 transmits data (transmit, TX) via three transmitting beams. The three transmitting beams are TX1, TX2, and TX3, and the three receiving beams are RX1, RX2, and RX3.

As shown in Fig. 3, when the terminal device 310 communicates with the terminal device 320 based on beams, they perform transmit beam scanning and receive beam scanning respectively. As can be seen from the previous text, beam scanning requires significant power consumption and expensive time-frequency resources. Therefore, in a sidelink communication system, terminal devices need to perform beam pairing based on the sidelink to establish relevant unicast or multicast links with other terminal devices. Beam pairing cannot be executed unilaterally by either the transmitting terminal or receiving terminal. This applies universally, whether establishing unicast, groupcast, or broadcast links.

Illustratively, the process of performing initial beam pairing between two terminal devices can be either before or after the establishment of a unicast link. The following example illustrates the execution of initial beam pairing before the establishment of a unicast link.

The process of performing initial beam pairing before the establishment of a unicast link involves first pairing the initial beams and then establishing a unicast link via the paired beams. The key objective of performing initial beam pairing is to enable terminal devices to establish a unicast link using the paired beams. By performing the initial beam pairing, the first terminal device can establish a unicast link with other distant terminal devices, thereby meeting more business requirements or higher-level commercial use case demands.

On the other hand, performing initial beam pairing before establishing a unicast link can also improve resource utilization. Since no unicast link is established, terminal devices may perform initial beam pairing based on a DCR. For example, a transmitting terminal device may need to perform multiple transmit beam scans across all beams used for transmitting DCR messages, in order to initiate the establishment process of a unicast link with an intended terminal device. Since DCR is typically carried on PSSCH, the transmitting terminal device may need to establish a unicast link via multiple PSSCH transmissions, resulting in inefficient utilization of time-frequency resources.

Without the initial beam pairing process that occurs before the establishment of a unicast link, terminal devices may not be able to determine the appropriate beam pair for the required information exchange, and thus cannot guarantee the basic communication range.

Of course, regardless of whether the initial beam pairing occurs before or after the establishment of a unicast link, terminal devices need to determine in advance the resources related to beam transmission and reception. For example, for SL FR2, it is necessary to specify the initial beam pairing process to facilitate the terminal devices in determining the transmission resources and the reception resources.

Before beam pairing, the terminal devices may not be aware of whether there are any other devices around, or they are uncertain about appropriate transmission occasions for beam sweeping, or they have no prior knowledge of reference signals to receive. This means that the information of reference signal (RS) used for initial beam pairing needs to be (pre-)configured. Reference signals corresponding to different beams should be transmitted on (pre-)configured resources to enable monitoring by receiving terminal devices.

In addition, during the beam pairing process, a receiving terminal device may face challenges in identifying the source of received beams. That is to say, the terminal device cannot determine which terminal device each of the received multiple beams comes from. For beam pairing, it is crucial for the receiving end to distinguish whether the multiple beams received originate from a single transmitting end or multiple transmitting ends. If the terminal device cannot distinguish where the received beams come from, it cannot determine which one is the optimal beam, and thus cannot perform beam pairing based on the received beams.

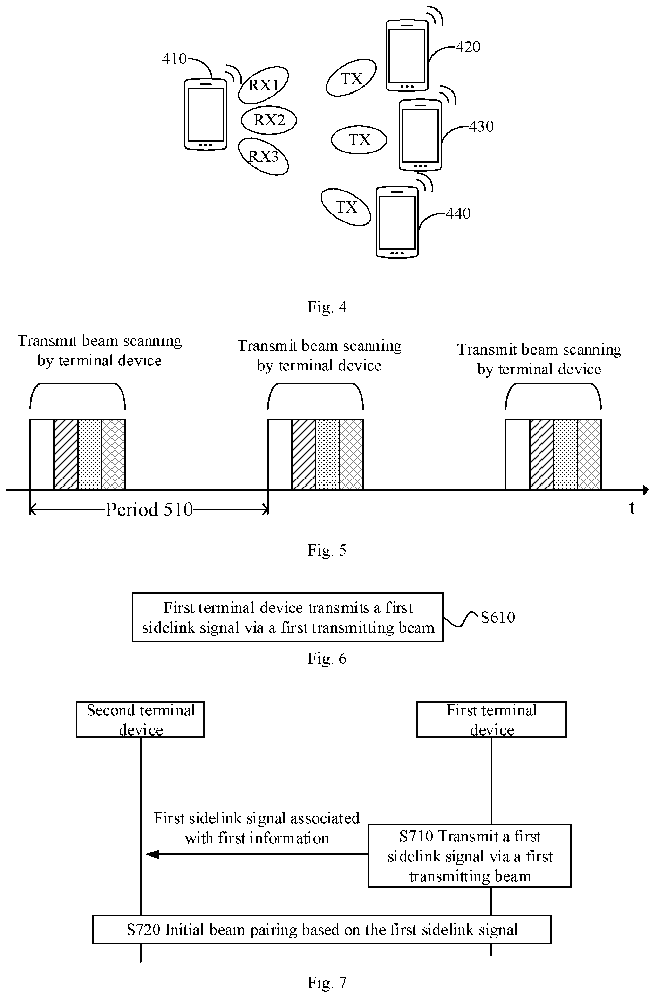

To facilitate understanding, potential issues in beam communication and beam pairing between terminal devices are introduced below with reference to Fig. 4. Fig. 4 is a schematic diagram of beam communication between a receiving terminal device and multiple transmitting terminal devices.

Referring to Fig. 4, the terminal device 410 receives data via three receiving beams, namely RX1, RX2, and RX3. The transmitting terminal devices includes three units, namely terminal device 420, terminal device 430, and terminal device 440. As shown in Fig. 4, the three transmitting terminal devices may transmit the same signal via three transmitting beams (TX) respectively. For example, all three terminal devices may transmit synchronization signals based on the same synchronization source.

In this scenario, if the terminal device 410 cannot distinguish different transmitting terminal devices, its beam reports may fail. For example, in the case where the terminal device 410 should transmit reporting beams to terminal devices 420 to 440 respectively, the terminal device 410 may only transmit a reporting beam to the terminal device 440, without reporting to the terminal devices 420 and 430.

The previous text introduces the issue of beam pairing among multiple terminal devices with reference to Figs. 3 and 4. For initial beam pairing, the transmitting terminal devices perform beam pairing by sending reference signals. The reference signals used for initial beam pairing may be of various types. Illustratively, the reference signals used for initial beam pairing may be channel state information-reference signal (CSI-RS) or synchronization signal similar to CSI-RS. Synchronization signals similar to CSI-RS include, for example, primary synchronization signal (PSS) and/or the secondary synchronization signal (SSS). Illustratively, the reference signal used for initial beam pairing may be a sidelink-synchronization signal block (S-SSB).

In the initial beam pairing of sidelink communication, reference signals (RS) with different beams have to be transmitted on (pre-)configured resources, so that the receiving terminal device can monitor the transmission using different receiving beam patterns. Illustratively, terminal devices may (pre-)configure resources for different beams by using a dedicated SL resource pool. For example, the resource pool can allocate specific time/frequency resources for RS transmissions with different beams.

In addition, for initial beam pairing, the periodic transmission of reference signals is crucial for the receiving terminal devices to determine expected resources for reception. Taking S-SSB as an example, transmitting devices (pre-)configure periodic transmission resources for S-SSB with different beam directions. However, the receiving terminal device cannot receive every beam from the transmitting terminal devices, and it lacks information about when the beam scanning starts or ends. In such a scenario, the receiving terminal device may miss the desired receiving opportunity. Therefore, periodic signal transmission can facilitate the receiving terminal device to determine the appropriate receiving timing.

For ease of understanding, the following provides an illustrative example using S-SSB for initial beam pairing. In the embodiments of the present application, S-SSB can also represent sidelink synchronization signal and PSBCH block. For example, sidelink synchronization signals of NR V2X mainly include sidelink primary synchronization signal (sidelink-PSS, S-PSS) and sidelink secondary synchronization signal (sidelink-SSS, S-SSS), and are combined with the PSBCH to form the S-SSB in a block format.

S-SSB represents the relevant information used for synchronization in the sidelink communication system. A 127-length M-sequence can be used for S-PSS, and a 127-length Gold sequence can be used for S-SSS. Illustratively, terminal devices can utilize S-PSS for initial signal detection and synchronization acquisition. Illustratively, terminal devices can utilize S-PSS and S-SSS to acquire detailed synchronization and detect synchronization signal ID.

During the beamforming process, multiple S-SSBs can be transmitted within a single S-SSB period. For example, in release 16 (Rel-16), terminal devices can transmit S-SSBs outside resource pools with a period of 160ms. For ease of understanding, the following provides an illustrative example of periodic beam scanning of terminal devices based on S-SSB with reference to Fig. 5.

Referring to Fig. 5, on the time axis, a terminal device performs transmit beam scanning based on a time interval corresponding to period 510. Each transmit beam scanning in Fig. 5 includes four transmitting beams, which can be oriented in four different directions respectively. Four beams in different directions can be utilized for repeated transmission of S-SSB.

Rel-16 further specifies the number of S-SSBs that can be repeatedly transmitted within one S-SSB period. To ensure the flexibility in S-SSB configuration, the number of S-SSBs within a single period is configurable. For specific configuration schemes regarding the number of S-SSBs within a single period, reference can be made to Table 1.

**Table 1**

| Frequency range | Subcarrier spacing / kHz | number of S-SSBs within a single period |
|---|---|---|
| FR1 | 15 | 1 |
| | 30 | 1, 2 |
| | 60 | 1, 2,4 |
| FR2 | 60 | 1, 2, 4, 8, 16, 32 |
| | 120 | 1, 2, 4, 8, 16, 32, 64 |

As can be seen from Table 1, for FR2, up to 64 S-SSBs can be transmitted within one period. Therefore, it is necessary to indicate the time-domain resources occupied by multiple S-SSBs transmitted within one period.

For initial beam pairing, especially in SL FR2, S-SSBs further need to be periodically transmitted via (pre-)configured resources outside the resource pool to achieve beam management. Based on the dedicated resource set for S-SSB transmission, terminal devices no longer need to dynamically allocate resources for S-SSB transmission, thereby ensuring uninterrupted beam pairing process.

The previous text introduces the resource allocation for initial beam pairing in sidelink communication with reference to Figs. 3 to 5. Multiple terminal devices can transmit RS for transmit beam scanning in a dedicated SL resource pool or a pre-configured resource pool. To perform initial beam pairing, the dedicated SL resource pool for RS transmission used for transmit beam scanning should have multiple candidate resources in time/frequency domains and multiple candidate sequences for RS transmission. The terminal device can select/determine the resource/sequence for RS transmission used for transmit beam scanning from the candidate resources/sequences.

However, in the case of (pre-)configuration, the resource information in the dedicated SL resource pool is public to multiple terminal devices within the same resource pool. If any terminal device can act as a receiving terminal device, it may result in unnecessary power consumption by these terminal devices in measuring RS and reporting the transmitting beams.

Furthermore, resource information in the dedicated resource pool may also result in resource collisions between reference signal transmissions from different terminal devices. Alternatively, when multiple transmitting terminal devices need to perform beam pairing or establish unicast links with the same terminal device, the transmitting beams from different terminal devices may also cause interference to the receiving terminal device.

In addition, if two terminal devices are not within the coverage of a same network device (such as a base station), how to achieve identification and synchronization between two terminal devices is also a problem that needs to be considered.

Based on this, the embodiments of the present application propose a method for sidelink communication. This method associates the sidelink signals used for initial beam pairing with the IDs and/or service priorities of the relevant terminal devices, thereby reducing mutual interference among multiple terminal devices in the sidelink communication system. To facilitate understanding, the method proposed in the embodiments of the present application is described in detail below with reference to Fig. 6.

Referring to Fig. 6, in step S610, the first terminal device transmits a first sidelink signal via a first transmitting beam. The first sidelink signal is used for initial beam pairing or sidelink establishment between the first terminal device and a second terminal device.

The first terminal device and the second terminal device can be any two of the terminal devices mentioned earlier that are capable of sidelink communication. For example, the first terminal device may be a vehicle in V2X, and the second terminal device may be a vehicle, a pedestrian, or an infrastructure network in V2X.

The first terminal device and the second terminal device may be two communication devices that require data transmission in sidelink communication. In some embodiments, the first terminal device and the second terminal device may be two communication devices performing initial beam pairing. In some embodiments, the first terminal device and the second terminal device may be two communication devices establishing a unicast link. In some embodiments, the first terminal device and the second terminal device may be two communication devices performing beam pair management.

The first terminal device and the second terminal device may be: both located within the same network coverage, or respectively located in different network coverages, or one within and one outside the network coverage, or both outside the network coverage. Illustratively, terminal devices located within the network coverage can perform sidelink communication based on configurations provided by the network device.

The first terminal device and the second terminal device may be communication devices that support antenna arrays. In some embodiments, the first terminal device and the second terminal device may perform analog beamforming based on antenna arrays. For example, the first terminal device may generate a transmitting beam and transmit a signal to the second terminal device via beam scanning. The term "transmitting beam" may also be referred to as "transmission beam." For another example, the second terminal device may generate a receiving beam and receive the signal transmitted by the first terminal device via beam scanning. In some embodiments, the first terminal device and the second terminal device may perform wireless communication at high frequency or ultra-high frequency. For example, the first terminal device and the second terminal device may communicate with each other within the frequency range corresponding to FR2.

The first terminal device may perform unicast communication, groupcast communication, or broadcast communication with one or more terminal devices. The second terminal device may be any one of the one or more terminal devices. That is to say, the first terminal device may be the source terminal device, and the second terminal device may be the destination terminal device.

In some embodiments, the establishment of the sidelink between the first terminal device and the second terminal device may be either unicast link establishment or the establishment of any link in groupcast or broadcast links. As mentioned earlier, in unicast communication, the first terminal device establishes communication only with one destination terminal device. In groupcast or broadcast communication, the first terminal device needs to communicate with multiple destination terminal devices.

Illustratively, the first terminal device may be the source terminal device initiating unicast communication, and the second terminal device may be any terminal device that the first terminal device needs to establish communication with. For example, the second terminal device may be any terminal device other than the first terminal device among the multiple terminal devices.

Illustratively, the first terminal device may be the cluster header that initiates groupcast or broadcast communication, and the second terminal device may be any group member in groupcast or broadcast communication. For example, in V2X, the first terminal device may be a vehicle that performs groupcast communication with other vehicles, and the second terminal device may be another vehicle in the groupcast communication.

The first terminal device transmits a first sidelink signal to the second terminal device for initial beam pairing or sidelink establishment. For ease of description, the following text takes initial beam pairing as an example for illustration.

The first sidelink signal may be any signal used for initial beam pairing or sidelink establishment, which is not limited here. For example, the first sidelink signal may be a RS or a sidelink synchronization signal.

Illustratively, the first sidelink signal may be an S-SSB. S-SSB may include S-PSS, S-SSS, and PSBCH.

Illustratively, the first sidelink signal may be S-PSS and S-SSS. For example, the first sidelink signal may be an S-SSB that only includes S-PSS and S-SSS. In other words, S-PSS and S-SSS are synchronization sequences independent of PSBCH.

Illustratively, the first sidelink signal may be a sidelink CSI-RS.

Illustratively, the first sidelink signal may be a DMRS.

The first sidelink signal is used for initial beam pairing between the first terminal device and the second terminal device. That is to say, the first sidelink signal corresponds to the second terminal device. Multiple terminal devices that have received the first transmitting beam can determine whether to perform initial beam pairing with the first terminal device based on the first sidelink signal.

In some embodiments, the first terminal device may perform initial beam pairing or sidelink establishment with multiple terminal devices via multiple sidelink signals. The multiple terminal devices may be multiple destination terminal devices that the first terminal device needs to communicate with. The multiple sidelink signals include the first sidelink signal, and the multiple terminal devices includes the second terminal device corresponding to the first sidelink signal. Therefore, the first terminal device may transmit different sidelink signals for different destination terminal devices.

As an example, in a case that the sidelink signal is an S-SSB, the index of the S-SSB may correspond to the ID of the terminal device. For example, the ID of UE1 corresponds to S-SSB(0), the ID of UE2 corresponds to S-SSB(1), the ID of UE3 corresponds to S-SSB(2), and so on.

Illustratively, multiple sidelink signals may correspond to the multiple terminal devices in a one-to-one correspondence. Illustratively, multiple sidelink signals may correspond to a subset of the multiple terminal devices.

Illustratively, when the first terminal device transmits a sidelink signal to the second terminal device, the first sidelink signal transmitted to the second terminal device can be determined based on the correspondence between different sidelink signals and different terminal devices. As an implementation, when the sidelink signal is an S-SSB, different S-SSBs correspond to different destination terminal devices, and the first sidelink signal is the S-SSB corresponding to the second terminal device among multiple S-SSBs.

The first terminal device transmits a first sidelink signal via a first transmitting beam. In other words, the first transmitting beam corresponds to the first sidelink signal. Furthermore, different sidelink signals correspond to different destination terminal devices. Therefore, the first terminal device can transmit information to different destination terminal devices via different transmitting beams.

The first transmitting beam may be one or more of the multiple transmitting beams, which is not limited here. Multiple transmitting beams may be utilized to transmit multiple sidelink signals. Illustratively, the multiple transmitting beams may be those transmitted by the first terminal device during one beam scanning period. Illustratively, the multiple transmitting beams may be those transmitted by the first terminal device during a first time period. The first time period may be a beam scanning period, or be determined based on the beam scanning period.

In some embodiments, the first time period may be one of the following: multiple consecutive subframes, one subframe, multiple consecutive time slots, and one time slot. For example, the first time period may be multiple consecutive subframes. When the sidelink signal is an S-SSB, the duration of the first time period may be equal to the period of one S-SSB. For another example, the first time period may be a subframe or multiple consecutive time slots. The first terminal device may allocate different S-SSBs to multiple destination terminal devices within a single subframe.

Illustratively, multiple transmitting beams of the first terminal device within one beam scanning period may correspond to multiple sidelink signals and/or multiple destination terminal devices, respectively, thereby facilitating reasonable beam configuration by the first terminal device.

Illustratively, when the first terminal device transmits sidelink signals via transmitting beams, it can determine the first transmitting beam for transmitting the first sidelink signal based on the correspondence between different transmitting beams and different sidelink signals. For example, the ID of the destination terminal device is correlated with the sequence of the S-SSB, and also associated with the position of the S-SSB within the beam transmission time slot. S-SSBs at different locations correspond to different transmitting beams.

Illustratively, the first transmitting beam may be one of multiple transmitting beams, so that the first terminal device can transmit sidelink signals to multiple terminal devices via these multiple transmitting beams. For example, the first transmitting beam is one of four transmitting beams in one round of beam scanning, and the four transmitting beams correspond to four terminal devices respectively. For another example, the first terminal device may allocate a terminal device ID to the beam of each S-SSB, ensuring that each destination terminal device corresponds to one beam. Such configuration on the one hand can enable the destination terminal device to quickly establish a connection with the source terminal device, and on the other hand, can reduce or avoid resource collisions within a dedicated resource set.

Illustratively, the first transmitting beam may be multiple beams among the multiple transmitting beams, thereby enabling the terminal device to more flexibly adjust the beam configuration for beam pairing. For example, when the first terminal device needs to perform an urgent communication service with the second terminal device, it can transmit the first sidelink signal via multiple beams to establish communication with the second terminal device as soon as possible.

Illustratively, the first transmitting beam is at least one beam among multiple transmitting beams within a first time period. When multiple transmitting beams are used by the first terminal device to transmit multiple sidelink signals including the first sidelink signal, the multiple sidelink signals may establish a one-to-one correspondence with multiple terminal devices including the second terminal device.

Illustratively, in order to allocate corresponding sidelink signals to multiple destination terminal devices, the symbols within the first time period may be utilized as much as possible to carry sidelink signals. For example, the first time period may include at least one time slot. Any of the at least one time slot may include multiple symbols. In multiple symbols of any time slot, the first symbol may be used to carry automatic gain control (AGC), and other symbols except for the first one may be used to carry at least one guard interval (GAP) and multiple sidelink signals.

Illustratively, during the first time period, when the number of sidelink signals is greater than the number of multiple terminal devices that the first terminal device needs to communicate with, any one of the multiple terminal devices may correspond to at least one sidelink signal. The position index of at least one sidelink signal corresponding to any terminal device within the first time period may be determined based on one or more of: the number of multiple terminal devices; the terminal device ID of any terminal device; the number of multiple sidelink signals within the first time period; the position information of multiple sidelink signals within the first time period, which will be elaborated later with formulas.

In some embodiments, multiple transmitting beams, including the first transmitting beam, may periodically transmit multiple sidelink signals. For example, when the sidelink signal is an S-SSB, within one S-SSB period, the first terminal device may generate multiple transmitting beams to transmit multiple sidelink signals. Multiple transmitting beams may perform periodic beam scanning based on a repetition period. The first transmitting beam may be one or more beams among the multiple transmitting beams transmitted periodically.

Illustratively, multiple periodic transmissions of S-SSB may be conducted within one S-SSB period. Each of the multiple S-SSBs may correspond to a beam scanning direction. That is to say, each beam scanning direction has one S-SSB. The S-SSB period may be allocated to the first terminal device with the assistance of a network device, set by the first terminal device itself, or the second terminal device may search for S-SSB according to a default period (e.g., 160ms). The dedicated resource set for S-SSB transmission is also (pre-)configured.

In some embodiments, multiple transmitting beams, including the first transmitting beam, may transmit multiple sidelink signals aperiodically, thereby avoiding unnecessary sidelink signal transmission and alleviating resource congestion. Illustratively, the sidelink signal used for initial beam pairing may be transmitted semi-persistently in both activated and deactivated states. As an example, if the transmitting terminal device (e.g., UE) does not intend to trigger the establishment of a unicast link or has already paired the beams for the unicast link, then the terminal device does not need to periodically transmit reference signals for initial beam pairing.

The first sidelink signal may be associated with first information to achieve the correspondence between the first sidelink signal and the terminal device. Illustratively, for different destination terminal devices, the first terminal device may transmit different sidelink signals via different transmitting beams, and indicate to the destination terminal device through the first information, thereby achieving more effective sidelink communication.

To enhance the efficiency of sidelink communication, the first information may include one or more of: ID of the first terminal device; ID of the second terminal device; ID of a terminal device group in which the first terminal device and the second terminal device are located; and priority of a communication service between the first terminal device and the second terminal device.

In unicast communication, the first terminal device serves as the source terminal device, and its ID may also be referred to as the source ID. As the destination terminal device, the ID of the second terminal device may also be referred to as the destination ID. Therefore, the first information in the unicast may include the source ID and/or the destination ID.

In groupcast communication, the second terminal device may be any terminal device in the terminal device group. The terminal device group may be the communication group which the first terminal device and/or the second terminal device are located. The ID of the terminal device group may also be referred to as the destination group ID. Therefore, the first information in the groupcast may include the source ID and/or the destination group ID.

Whether it is the first terminal device or the second terminal device, the ID of the terminal device (e.g., UE ID) can be represented in multiple approaches. In other words, the source ID or destination ID may be represented in multiple ways.

In some embodiments, the ID of the terminal device may be an ID related to the terminal device itself. For example, the ID of the terminal device may be the international mobile station equipment identity (IMEI), international mobile subscriber identity (IMSI), or S-temporary mobile subscription identifier (S-TMSI). For another example, the ID of the terminal device might be derived from the aforementioned identifiers (e.g., UE ID = IMSI mod 1024).

In some embodiments, the ID of the terminal device may be the ID of the terminal device at different protocol layers. Illustratively, the terminal device may use a layer 2 (L2) ID. Each terminal device has an L2 ID when performing V2X PC5 communication. For example, the terminal device allocates the L2 ID by itself. Each frame transmitted via the L2 link contains this ID information.

Optionally, if the first terminal device is aware of the L2 ID of the second terminal device in advance, it may use that L2 ID as the destination ID. If not, it may use the default ID as the destination ID. The default ID is, for example, a ProSe identifier.

In some embodiments, when supporting V2X messages based on the internet protocol (IP), the terminal device can automatically configure an IPv6 link as the source IP address. The source IP address can also serve as the ID of the terminal device.

In some embodiments, when the first sidelink signal is an S-SSB used for time and frequency synchronization, the communication between the first terminal device and the second terminal device also needs to consider whether both terminal devices are within the coverage of the same network device. Multiple terminal devices within the coverage of the same network device can transmit sidelink signals for transmit beam scanning in a dedicated SL resource pool. For example, the dedicated SL resource pool used for transmit beam scanning or RS transmission has multiple candidate resources in time/frequency domains and multiple candidate sequences for RS transmission. However, when multiple terminal devices are located within the coverages of different network devices, the dedicated resource pools are different.

Illustratively, in V2X, communication may be required between two vehicles, between a vehicle and another terminal device, as well as between a vehicle and the infrastructure network. The two terminal devices requiring communication may both be within the coverage of the same base station, or they may be located within and outside the coverage respectively. If they are both within the coverage of the same base station, both the first terminal device and the second terminal device select the synchronization signal transmitted by the synchronization reference with the highest priority within the area when determining their transmission synchronization. If the first terminal device or the second terminal device is located outside the coverage, the terminal device outside the coverage needs to first synchronize with the sidelink synchronization signal (SLSS) transmitted by the terminal device within the coverage. SLSS is carried in S-SSB. S-SSB may include SLSS ID. The SLSS ID is, for example, a physical layer ID available for the terminal device transmitting S-SSB to select from {0, 1, ..., 335} as a synchronization reference. In certain scenarios, the IDs of multiple terminal devices transmitting S-SSB may refer to the SLSS ID and establish a one-to-one correspondence with multiple SLSS IDs.

Illustratively, when the first terminal device is within a certain coverage, the SSB transmitted by the first terminal device can also be used to synchronize the second terminal device or other terminal devices.

Illustratively, when the first terminal device transmits an S-SSB, the ID of the first terminal device may be the SLSS ID, or the ID of the first terminal device may be determined through the SLSS ID. For example, when transmitting an S-SSB, the first terminal device may use the value of the SLSS ID of the sidelink synchronization signal source as the value of its own ID. For another example, the first terminal device may convert the value of the SLSS ID, and this converted value may serve as the ID of the first terminal device.

Illustratively, when multiple terminal devices requiring communication are not within the coverage of the same network device, each terminal device should be assigned a unique address code in order to reduce interference between different terminal devices. These address codes possess good randomness and mutual exclusivity, thereby avoiding interference between different source terminal devices and different destination terminal devices. As an example, if the first terminal device and the second terminal device correspond to different cells or network devices respectively, the ID of the first terminal device and the ID of the second terminal device may include identification information of the cells or network devices.

As an implementation method, the address codes may be generated by a pseudo-random number generator or configured through external input. For example, in a sidelink communication system, address orthogonal codes are introduced to identify different terminal devices. After receiving the signal, the second terminal device decodes the address orthogonal code to determine and select the source terminal device it wants to communicate with. For another example, spreading codes, pseudo-random codes, or other sequence-form address codes are used to identify different terminal devices. As an example, spreading codes may be categorized into long codes and short codes. Long codes are used to distinguish users of different base stations, while short codes are used to distinguish signals of different users within the same base station.

For the terminal device group where the second terminal device is located, the ID of the terminal device group may either be the same as or different from the ID of the second terminal device.

In some embodiments, the ID of the terminal device group may be provided by the application layer or the terminal device's middle layer (protocol layer), or be determined by V2X according to the ID mapping provided by the application layer. That is to say, the ID of the terminal device group may correspond to a high-level ID or an ID mapped from a high-level ID.

In some embodiments, the ID of the terminal device group may be used to determine the ID of the second terminal device. Illustratively, the ID of the terminal device group corresponds to the ID of the second terminal device. That is to say, the ID of the terminal device group may be mapped to the ID of the second terminal device. As an example, the ID of the terminal device group is a high-level ID or a protocol layer ID mapped from the high-level ID, and the ID of the second terminal device is a low-level ID. For example, the ID of the terminal device group is a high-level ID provided by the application layer, and the ID of the second terminal device is the physical layer ID mapped from this high-level ID.

It should be understood that although the ID of the terminal device group can be used to identify the multicast service group, in V2X, V2V, or D2D environments where the first terminal device organizes itself, it may be difficult to manage or establish a common group identifier, especially in high-frequency beam scanning and pairing. Therefore, the ID information of each terminal device in the group is very important.

The preceding text introduces how to determine the terminal device ID associated with the first information. Associating the first sidelink signal with the first information can facilitate the initial beam pairing or sidelink establishment between the first terminal device and the second terminal device, thereby improving communication efficiency. In some embodiments, the first information may include one or more of the above IDs.

Illustratively, the first information may include the ID of the first terminal device (source ID) and the ID of the second terminal device (destination ID), such that both the source ID and the destination ID are simultaneously associated with the sidelink signal. Through the first information, it can be ensured that the first terminal device and the second terminal device can perform initial beam pairing or sidelink establishment via the first transmitting beam. On the one hand, the first information allows the second terminal device to clearly know that the first transmitting beam comes from the first terminal device. On the other hand, the first information also enables the second terminal device to select the source terminal device it most wants to connect with and perform direct communication when receiving multiple first transmitting beams from multiple terminal devices.

As an example, the first information may also include combined information of a source ID and a destination (group) ID, so as to facilitate the association of the first information with the first sidelink signal. For example, S-PSS or S-SSS can carry the combined information, thereby providing additional information source information to the second terminal device.

Illustratively, the first information may include the ID of the second terminal device or the ID of the terminal device group (destination group ID), so that the second terminal device can select the first terminal device that needs to communicate with it from among multiple terminal devices. Based on the first information, the first terminal device can determine the resources/sequences for transmitting the first sidelink signal. That is to say, the first terminal device can select the first transmitting beam to transmit the first sidelink signal based on the destination ID or destination group ID in the first information.

For example, the selection/determination of resources/sequences for transmitting the RS may depend on the destination (group) ID during the unicast link establishment process. When resources/sequences are dependent on the destination (group) ID, the first terminal device may utilize different resources/sequences for RS transmission for terminal devices with different destination IDs, thereby avoiding or at least reducing the probability of resource/sequence collisions among multiple terminal devices transmitting sidelink signals within the same SL resource pool.

For instance, for destination terminal devices with different IDs, the first terminal device can utilize different SSBs or sidelink channel state information (CSI) sequences. After associating the destination ID with either the S-SSB or the sidelink CSI sequence, the first terminal device can transmit different S-SSBs or sidelink CSI sequences to different destination terminal devices. Furthermore, based on different destination IDs, the first terminal device can determine which transmitting beam to use for transmitting information to which destination terminal device.

As an example, when the index of the S-SSB sequence corresponds to the ID of the terminal device, the reserved resources occupied by the index of the S-SSB may correspond to the resources for the second terminal device to transmit responses.

As can be seen from the preceding text, the first information may also include priorities of communication services between the first terminal device and the second terminal device, in order to meet the communication requirements of different services. In the resource pool, multiple source terminal devices (multiple first terminal devices) can be allowed to communicate with the second terminal device. When the first information includes service priority, the second terminal device can quickly select the source terminal device with the highest priority according to the first information and perform beam pairing.

Illustratively, when the sidelink signal is an S-SSB, the second terminal device can immediately select SLSS transmitted by the source terminal device with the highest priority among multiple source terminal devices based on the first information, and synchronize with it.

In summary, the first information may include the ID of the first terminal device, the ID of the second terminal device, priority information of the service, or a combination of the ID of the first terminal device and the ID of the second terminal device, to facilitate the decision-making of the second terminal device.

In some embodiments, the first information may be transmitted in various approaches. Illustratively, if there is sidelink control information (SCI) transmitted together, the first information may be carried in the SCI. Illustratively, if there is PSBCH transmitted together, the first information may be added to the PSBCH. Illustratively, the first information may also be provided to the destination terminal device through S-PSS or S-SSS mapped onto symbols. A detailed explanation of this mechanism with reference to a sequence generation method will follow in subsequent sections.

The previous text introduces a method for sidelink communication between terminal devices based on the association of beams/sidelink signals with terminal device IDs/service priorities, with reference to Fig. 6. For ease of understanding, an exemplary introduction is provided below in conjunction with Fig. 7. Fig. 7 illustrates from the perspective of interaction between the first terminal device and the second terminal device.

Referring to Fig. 7, in step S710, the first terminal device transmits a first sidelink signal via a first transmitting beam. The first sidelink signal is associated with first information.

In step S720, the first terminal device and the second terminal device perform initial beam pairing based on the first sidelink signal. After receiving the first transmitting beam, the second terminal device can detect the first sidelink signal. Based on the first information carried by the first sidelink signal, the second terminal device can determine whether to communicate with the first terminal device. If the second terminal device chooses to communicate with the first terminal device, it can perform initial beam pairing with the first terminal device based on the first sidelink signal.

The previous text introduces the first information associated with the first sidelink signal. How the first information is associated with the first sidelink signal is also a problem that needs to be solved. As can be seen from the previous text, in the case of transmitting SCI or PSBCH, the first information may be carried in SCI or PSBCH. However, when the first sidelink signal is a RS, S-PSS, or S-SSS, it is also necessary to associate the first information with the first sidelink signal to reduce interference among different terminal devices. Furthermore, associating the first information with the first sidelink signal can also accelerate beam pairing between terminal devices and improve the pairing speed of transmitting beam and receiving beam. In a shared dedicated resource pool, it is even more crucial for the source terminal device and the destination terminal device to quickly achieve beam pairing and establish communication, in order to reduce mutual interference among different terminal devices.

In some embodiments, the first information is used to generate a first sequence corresponding to the first sidelink signal. That is to say, when generating the first sequence corresponding to the first sidelink signal, source ID, destination ID, service priority information, or a combination of source ID and destination ID may be incorporated. For example, different sidelink signal sequences may correspond to different destination IDs in a one-to-one correspondence.

Illustratively, when the first information includes a source ID and a destination ID, the first information can be used to generate a new sequence with the S-SSB. For example, the first information may be located in the first m bits or the last m bits of the new sequence. By interpreting the first m bits or the last m bits of the sequence, the second terminal device can determine whether this S-SSB sequence is related to itself. If the second terminal device finds that the first m bits or the last m bits of the interpreted sequence do not match its own information, it discards reading the complete sequence.

Illustratively, when the first information is used to generate the first sequence corresponding to the first sidelink signal, the information structure of the sidelink signal requires redesign. For example, during the initial beam pairing process before establishing a sidelink unicast link using S-SSB, the information structure of S-SSB is adjusted so that the second terminal device can identify the first terminal device via the S-SSB of the first terminal device. For another example, different shifts of the synchronization sequence can map the service priorities corresponding to different destination terminal devices.

As an example, when the first terminal device transmits an S-SSB for synchronization, the first information may be integrated with the S-PSS or S-SSS to generate a new sequence. Especially when the S-SSB excludes PSBCH, the first information needs to be provided to the destination terminal device via S-PSS or S-SSS. Typically, within a single time slot, the S-SSB containing PSBCH occupies 4 symbols. In embodiments of the present application, when PSBCH is not contained, S-PSS and S-SSS may each occupy 2 symbols, or they may each occupy 1 symbol.

Illustratively, when the first information is used to generate the first sequence corresponding to the first sidelink signal, the first information can be used to determine the cyclic shift of the first sequence. As an example, the first information can be used to determine a first offset. The cyclic shift of the first sequence or a partial sequence within the first sequence can be determined based on the first offset.

For example, when the first information includes at least one of the ID of the first terminal device, the ID of the second terminal device, and the ID of the terminal device group, the first offset may be the raw value of the terminal device ID or a transformed value of the terminal device ID.

For another example, when the first information includes a combination of at least two of the ID of the first terminal device, the ID of the second terminal device, and the ID of the terminal device group, the first offset may be a parameter corresponding to this combination information.

For another example, when the first information includes the priority of the communication service between the first terminal device and the second terminal device, the first offset may be the raw value of the priority or a transformed value of the priority.

As an implementation method, when the first sidelink signal is an S-SSB, the first information may be incorporated during the generation of the S-PSS or S-SSS sequence. For example, when the first information is incorporated into the S-SSS sequence, the resultant sequence may be referred to as the first SSS sequence. That is to say, the first sequence includes the first S-SSS sequence that incorporates the first information. The cyclic shift of the first S-SSS sequence can be determined based on the first offset.

The following text illustrates the sequences of S-PSS and S-SSS using the example of incorporating the first information into the S-SSS sequence.

Optionally, the S-PSS sequence may be expressed as:
${d}_{s - pss} \left(n\right) = 1 - 2 X \left(m\right) , m = \left(n+43{N}_{ID}^{\left(2\right)}\right) mod 127 , 0 \leq n \leq 127 ;$
$X \left(i+7\right) = \left(X\left(i+4\right)+X\left(i\right)\right) mod 2 .$

The initial value is: $\left[X\left(6\right) X\left(5\right) X\left(4\right) X\left(3\right) X\left(2\right) X\left(1\right) X\left(0\right)\right] = \left[1 1 1 0 1 1 0\right] .$

Optionally, the first information may be incorporated into the first S-SSS sequence, and the resultant first S-SSS sequence may be expressed as:
${d}_{s - sss} \left(n\right) = \left[1-2{X}_{0}\left(\left(n+{m}_{0}\right)mod127\right)\right] \left[1-2{X}_{1}\left(\left(n+{m}_{1}\right)mod127\right)\right] ,$
$0 \leq n \leq 127 , {m}_{0} = 15 \left⌊\frac{{N}_{ID}^{\left(1\right)}}{112}\right⌋ + Δ + 5 {N}_{ID}^{\left(2\right)} , {m}_{1} = {N}_{ID}^{\left(1\right)} mod 112 ;$
wherein, Δ represents the first offset, and is a positive integer, ${N}_{ID}^{\left(1\right)} ∈ \left\{0,1,…,335\right\} , {N}_{ID}^{\left(2\right)} ∈ \left\{0, 1, 2\right\}$ , ${X}_{0} \left(i+7\right) = \left({X}_{0}\left(i+4\right)+{X}_{0}\left(i\right)\right) mod 2 , {X}_{1} \left(i+7\right) = \left({X}_{1}\left(i+4\right)+{X}_{1}\left(i\right)\right) mod 2 .$

The initial values respectively are : $\left[{X}_{0}\left(6\right) {X}_{0}\left(5\right) {X}_{0}\left(4\right) {X}_{0}\left(3\right) {X}_{0}\left(2\right) {X}_{0}\left(1\right) {X}_{0}\left(0\right)\right] = \left[0 0 0 0 0 0 1\right] . s$ $\left[{X}_{1}\left(6\right) {X}_{1}\left(5\right) {X}_{1}\left(4\right) {X}_{1}\left(3\right) {X}_{1}\left(2\right) {X}_{1}\left(1\right) {X}_{1}\left(0\right)\right] = \left[0 0 0 0 0 0 1\right] .$

When determining the cyclic shift for the first S-SSS sequence, different Δ values can generate distinct S-SSS sequences, thereby allowing for the differentiation of various terminal devices or priorities. Illustratively, Δ may represent the level of service priority. For example, the larger the value of Δ, the higher the priority, and vice versa. Illustratively, Δ may represent the source ID, destination ID, or a combination of source ID and destination ID. For example, different Δ may correspond to multiple destination terminal devices or source terminal devices in a one-to-one correspondence.

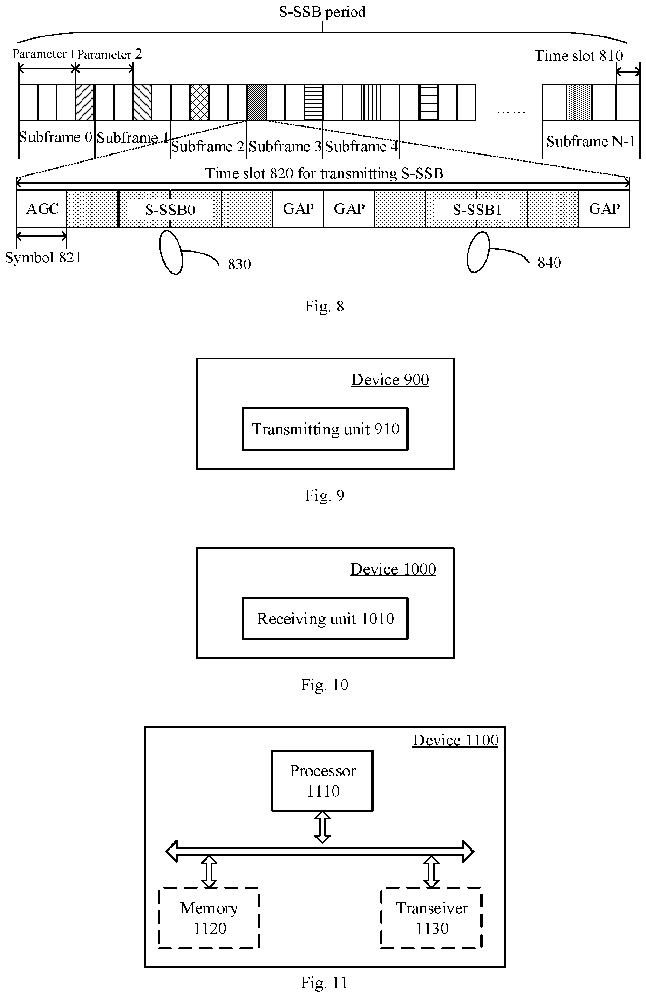

The preceding text introduces how to incorporate the first information into S-SSB, how the resultant S-SSB is transmitted, and how the terminal device determines the S-SSB related to itself among multiple S-SSBs, which are also issues that need to be considered. Referring to Fig. 8, the following text illustrates the method by which the first terminal device transmits different S-SSBs via different transmitting beams using the example of the sidelink signal being an S-SSB. Different S-SSBs may correspond to different destination terminal devices.

As can be seen from the preceding text, the first terminal device can perform transmit beam scanning in one S-SSB period to achieve initial beam pairing or establish sidelinks with other terminal devices. The S-SSB period may be a beam scanning period (i.e., the first time period mentioned earlier).

The S-SSB period typically includes multiple subframes. Given a fixed S-SSB period duration, the number and positions of S-SSBs within the period may vary with subcarrier spacing (SCS).

During a beam scanning period of S-SSB, several parameters are typically configured to determine the S-SSB distribution. Illustratively, these parameters are as follows: first parameter (parameter 1), representing the slot offset, that is the slot offset of the first S-SSB; second parameter (parameter 2), representing the interval between two adjacent S-SSB time slots; third parameter (parameter 3) representing the number of S-SSBs within a single time slot; and fourth parameter (parameter 4) representing the periodicity of S-SSBs.

Illustratively, the four parameters configured during the S-SSB period may be allocated to the first terminal device with the assistance of a network device, or set by the first terminal device itself.

Illustratively, in a beam transmission time slot, except for AGC and GAP, the rest can all be S-SSB. For example, for a dedicated S-SSB slot structure, all symbols except those allocated to AGC and GAP can be utilized for transmitting S-SSBs intended for destination terminal devices. For another example, within a slot structure, the first symbol bit is allocated to AGC, the last symbol bit is allocated to GAP, and all remaining symbols can be used to transmit S-SSBs.

Illustratively, for groupcast or broadcast communication, the first terminal device can determine the mapping relationship between the destination terminal devices and the S-SSB based on the number of multiple destination terminal devices that require communication. For example, if S-PSS and S-SSS are used for initial beam pairing, all S-SSBs within one period can be allocated to each destination terminal device based on the four configuration parameters within the S-SSB period.

As can be seen from the preceding text, the one or more S-SSBs allocated to each destination terminal device can be determined based on various information. This information may include the number of terminal devices requiring allocation, the ID of each terminal device, the number of S-SSBs, and the determination of the position information of multiple S-SSBs within the S-SSB period. The ID of each terminal device may be any of the multiple IDs mentioned above, or an ID determined based on other configurations.

Illustratively, the position information of S-SSBs may include one or more of: the first parameter, the second parameter, the third parameter, the number of subframes within the first time period, and the number of time slots within a subframe.

Illustratively, when the number of terminal devices requiring S-SSB allocation is K (K is a positive integer), the ID of each terminal device can be mapped to [0, 1, ..., K-1]. That is to say, each of the K terminal devices can generate a corresponding mapped ID based on its own ID and K, facilitating the allocation of S-SSBs by the first terminal device.

As an example, the mapped ID of any one of the K terminal devices may be represented as ${UE}_{ID}^{′}$*.* wherein ${UE}_{ID}^{′} ∈ \left[0,1,…,K-1\right]$.

As an example, in order to fully utilize the S-SSB resources within the first time period or S-SSB period, each terminal device can be configured with the same number of S-SSB repetitions. For example, the number of repetitions may be R, which means that each terminal device is configured with R S-SSBs.

For example, the number R of S-SSBs corresponding to any terminal device among K terminal devices may be calculated as:
$R = \left⌊\frac{L ∗ P 3}{K}\right⌋ ;$
where $\left⌊⋅\right⌋$ denotes the floor function, L represents the number of time slots containing S-SSB within the first time period (e.g., S-SSB period), derived as $L = \left⌊\frac{X ∗ N - P 1}{P 2}\right⌋$, where X represents the number of time slots per subframe, N represents the number of subframes within the first time period, P1 represents the first parameter, P2 represents the second parameter, and P3 represents the third parameter.

As an example, when the first symbol position in a time slot is allocated to AGC and the last symbol position to GAP, the maximum number M of S-SSBs that can be configured in each time slot containing S-SSBs can be calculated as:
$M = \left⌊\left(Q-2\right)/γ\right⌋ ;$
where Q represents the number of symbols within a time slot, and γ represents the number of symbols occupied by a single S-SSB within the time slot.

To facilitate understanding, the following text explains the position indexing of the S-SSB corresponding to any one of the K terminal devices using the example of the first terminal device transmitting S-SSBs to K terminal devices within the first time period. The first time period may include multiple time slots.

When a terminal device with a mapped ID of ${UE}_{ID}^{′}$ among the K terminal devices corresponds to R S-SSBs, the time slot ${TS}_{{UE}_{ID}^{′} , i}$ where the i-th S-SSB corresponding to the terminal device is located can be expressed as:
${TS}_{{UE}_{ID}^{′} , i} = P 1 + \left⌊\left(i∗K+{UE}_{ID}^{′}\right)/P3\right⌋ ∗ P 2 ;$
where i is a natural number from 0 to R-1.

Furthermore, when the first symbol position in the time slot is allocated to AGC, the symbol position $S - {SSB}_{{UE}_{ID}^{′} , i}$ corresponding to the i-th S-SSB of the terminal device with the mapped ID ${UE}_{ID}^{′}$ can be expressed as:
$S - {SSB}_{{UE}_{ID}^{′} , i} = 1 + γ ∗ \left(i∗K+{UE}_{ID}^{′}\right) mod \left(P3\right) .$

Based on the aforementioned position formula, each terminal device can quickly find the corresponding S-SSB sequence index position and the corresponding transmitting beam according to its own ID information.

For ease of understanding, an illustrative explanation is provided below with reference to the example in Fig. 8. It should be understood that Fig. 8 only illustrates one possible distribution pattern of S-SSBs and does not represent all examples.

Referring to Fig. 8, one S-SSB period includes N subframes, namely subframe 0, subframe 1, ..., and subframe N-1. Each subframe includes 4 time slots. Therefore, the value of X is 4. There are two types of time slots in this S-SSB period, namely time slot 810 and time slot 820. Time slot 810 is a slot not for S-SSB transmission, while time slot 820 is a slot for S-SSB transmission. In Fig. 8, multiple time slots 820 are filled with different patterns, indicating that the S-SSBs transmitted in each time slot 820 may be different.

In Fig. 8, parameter 1 and parameter 2 can be used to determine the distribution of S-SSBs within one period. As shown in Fig. 8, parameter 1 may represent the slot offset of the first time slot 820 within the period. Parameter 2 may represent the slot interval between two adjacent time slots 820. As can be seen from Fig. 8, the value of P1 is 3, and the value of P2 is 3.

Referring further to Fig. 8, each time slot 820 includes 12 symbols (labeled 821). As shown in Fig. 8, the first symbol 821 in the time slot 820 is used to carry AGC, the second to fifth symbols 821 are used to carry S-SSB0, the eighth to eleventh symbols 821 are used to carry S-SSB1, and the other symbols 821 are used to carry GAP. In the time slot 820 shown in Fig. 8, the value of P3 is 2 and the value of γ is 4.

Furthermore, S-SSB0 is transmitted via a transmitting beam 830, while S-SSB1 is transmitted via a transmitting beam 840. From the previous text, it can be known that S-SSB0 and S-SSB1 may correspond to different destination terminal devices respectively. When transmitting S-SSB0 and S-SSB1, the first terminal device can also indicate the first information associated with S-SSB0 and S-SSB1 respectively, to facilitate initial beam pairing between different destination terminal devices and the first terminal device.

The method embodiments of the present application are described in detail above in conjunction with Figs. 1 to 8. The device embodiments of the present application are described in detail with reference to Figs. 9 to 11. It should be understood that the description of the embodiments of device corresponds to the description of the embodiments of method. Therefore, the parts not described in detail can refer to the previous embodiments of method.

Fig. 9 is a schematic block diagram of a device for sidelink communication according to an embodiment of the present application. The device 900 may be any type of first terminal devices described above. The device 900 shown in Fig. 9 includes a transmitting unit 910.

The transmitting unit 910 is configured to transmit a first sidelink signal via a first transmitting beam, where the first sidelink signal is used for initial beam pairing between a first terminal device and a second terminal device; where the first sidelink signal is associated with first information, and the first information includes one or more of: ID of the first terminal device; ID of the second terminal device; ID of a terminal device group in which the second terminal device is located; and priority of a communication service between the first terminal device and the second terminal device.

Optionally, the second terminal device can be any terminal device within the terminal device group, and the ID of the terminal device group is used to determine the ID of the second terminal device.

Optionally, the ID of the terminal device group corresponds to the ID of the second terminal device. The ID of the terminal device group is a high-level ID or a protocol layer ID mapped from the high-level ID, and the ID of the second terminal device is a low-level ID.

Optionally, the first sidelink signal is an S-SSB which includes SLSS ID. The ID of the first terminal device is either the SLSS ID or determined through the SLSS ID.

Optionally, if the first terminal device and the second terminal device correspond to different cells or network devices respectively, the ID of the first terminal device and the ID of the second terminal device include identification information of the cells or network devices.

Optionally, the first information is used to generate a first sequence corresponding to the first sidelink signal.

Optionally, the first sidelink signal includes S-SSS, and the first sequence includes a first S-SSS sequence, where the cyclic shift of the first S-SSS sequence is determined based on a first offset, and the first offset is determined according to the first information.

Optionally, the first transmitting beam is at least one beam among multiple transmitting beams within a first time period, and multiple transmitting beams are used for the first terminal device to transmit multiple sidelink signals including the first sidelink signal, where the multiple sidelink signals correspond to the multiple terminal devices including the second terminal device in a one-to-one correspondence.

Optionally, the first time period may be one of multiple consecutive subframes, one subframe, multiple consecutive time slots, and one time slot.

Optionally, the first time period includes at least one time slot, and any one of the at least one time slot includes multiple symbols. The first symbol among the multiple symbols is used to carry AGC, and the other symbols except for the first symbol among the multiple symbols are used to carry at least one GAP and multiple sidelink signals.

Optionally, any one of the multiple terminal devices corresponds to at least one sidelink signal, and the position index of the at least one sidelink signal corresponding to any terminal device within the first time period is determined based on one or more of the number of multiple terminal devices; the terminal device ID of any terminal device; the number of multiple sidelink signals within the first time period; and the position information of multiple sidelink signals within the first time period.

Optionally, the first time period includes multiple consecutive subframes, the multiple sidelink signals are multiple S-SSBs, and the position information includes one or more of first parameter, used to indicate the slot offset of the first S-SSB within the first time period; second parameter, used to indicate the slot interval between two adjacent S-SSBs within the first time period; third parameter, used to indicate the number of S-SSBs within a single time slot; the number of subframes within the first time period; and the number of time slots within a single subframe.

Optionally, multiple transmitting beams within the first time period are used for the first terminal device to transmit S-SSBs to K terminal devices, where K is a positive integer. The number R of S-SSBs corresponding to any one of the K terminal devices is:
$R = \left⌊\frac{L ∗ P 3}{K}\right⌋ ;$
where $\left⌊⋅\right⌋$ denotes the floor function, $L = \left⌊\frac{X ∗ N - P 1}{P 2}\right⌋$, where X represents the number of time slots per subframe, N represents the number of subframes within the first time period, P1 represents the first parameter, P2 represents the second parameter, and P3 represents the third parameter.

Optionally, multiple transmitting beams within the first time period are used for the first terminal device to transmit S-SSBs to K terminal devices. The first time period includes multiple time slots. A terminal device with a mapped ID of ${UE}_{ID}^{′}$ among the K terminal devices corresponds to R S-SSBs, and the time slot ${TS}_{{UE}_{ID}^{′} , i}$ where the i-th S-SSB corresponding to the terminal device is located is:
${TS}_{{UE}_{ID}^{′} , i} = P 1 + \left⌊\left(i∗K+{UE}_{ID}^{′}\right)/P3\right⌋ ∗ P 2 ;$
where i is a natural number from 0 to R-1, and ${UE}_{ID}^{′} ∈ \left[0,1,…,K-1\right]$.

Optionally, each time slot within the first time period includes multiple symbols, and the symbol position $S - {SSB}_{{UE}_{ID}^{′} , i}$ corresponding to the i-th S-SSB of the terminal device with the mapped ID ${UE}_{ID}^{′}$ is:
$S - {SSB}_{{UE}_{ID}^{′} , i} = 1 + γ ∗ \left(i∗K+{UE}_{ID}^{′}\right) mod \left(P3\right) ;$
where γ represents the number of symbols occupied by a single S-SSB within the time slot.

Optionally, the first sidelink signal is one or more of the following: S-SSB, S-PSS, and S-SSS, sidelink channel state information reference signal, and demodulation reference signal.

Fig. 10 is a schematic block diagram of another device for sidelink communication according to an embodiment of the present application. The device 1000 may be any type of second terminal devices described above. The device 1000 shown in Fig. 10 includes a receiving unit 1010.

The receiving unit 1010 is configured to receive a first sidelink signal transmitted by a first terminal device via a first transmitting beam, where the first sidelink signal is used for initial beam pairing between the first terminal device and the second terminal device; where the first sidelink signal is associated with first information, and the first information includes one or more of: ID of the first terminal device; ID of the second terminal device; ID of a terminal device group in which the second terminal device is located; and priority of a communication service between the first terminal device and the second terminal device.

Optionally, the second terminal device can be any terminal device within the terminal device group, and the ID of the terminal device group is used to determine the ID of the second terminal device.

Optionally, the ID of the terminal device group corresponds to the ID of the second terminal device. The ID of the terminal device group is a high-level ID or a protocol layer ID mapped from the high-level ID, and the ID of the second terminal device is a low-level ID.

Optionally, the first sidelink signal is an S-SSB which includes SLSS ID. The ID of the first terminal device is either the SLSS ID or determined through the SLSS ID.

Optionally, if the first terminal device and the second terminal device correspond to different cells or network devices respectively, the ID of the first terminal device and the ID of the second terminal device include identification information of the cells or network devices.

Optionally, the first information is used to generate a first sequence corresponding to the first sidelink signal.

Optionally, the first sidelink signal includes S-SSS, and the first sequence includes a first S-SSS sequence, where the cyclic shift of the first S-SSS sequence is determined based on a first offset, and the first offset is determined according to the first information.

Optionally, the first transmitting beam is at least one beam among multiple transmitting beams within a first time period, and multiple transmitting beams are used for the first terminal device to transmit multiple sidelink signals including the first sidelink signal, where the multiple sidelink signals correspond to the multiple terminal devices including the second terminal device in a one-to-one correspondence.

Optionally, the first time period may be one of multiple consecutive subframes, one subframe, multiple consecutive time slots, and one time slot.

Optionally, the first time period includes at least one time slot, and any one of the at least one time slot includes multiple symbols. The first symbol among the multiple symbols is used to carry AGC, and the other symbols except for the first symbol among the multiple symbols are used to carry at least one GAP and multiple sidelink signals.

Optionally, any one of the multiple terminal devices corresponds to at least one sidelink signal, and the position index of the at least one sidelink signal corresponding to any terminal device within the first time period is determined based on one or more of the number of multiple terminal devices; the terminal device ID of any terminal device; the number of multiple sidelink signals within the first time period; and the position information of multiple sidelink signals within the first time period.

Optionally, the first time period includes multiple consecutive subframes, the multiple sidelink signals are multiple S-SSBs, and the position information includes one or more of first parameter, used to indicate the slot offset of the first S-SSB within the first time period; second parameter, used to indicate the slot interval between two adjacent S-SSBs within the first time period; third parameter, used to indicate the number of S-SSBs within a single time slot; the number of subframes within the first time period; and the number of time slots within a single subframe.

Optionally, multiple transmitting beams within the first time period are used for the first terminal device to transmit S-SSBs to K terminal devices, where K is a positive integer. The number R of S-SSBs corresponding to any one of the K terminal devices is:
$R = \left⌊\frac{L ∗ P 3}{K}\right⌋ ;$
where $\left⌊⋅\right⌋$ denotes the floor function, $L = \left⌊\frac{X ∗ N - P 1}{P 2}\right⌋$, where X represents the number of time slots per subframe, N represents the number of subframes within the first time period, N > 1, P1 represents the first parameter, P2 represents the second parameter, and P3 represents the third parameter.

Optionally, multiple transmitting beams within the first time period are used for the first terminal device to transmit S-SSBs to K terminal devices. The first time period includes multiple time slots. A terminal device with a mapped ID of ${UE}_{ID}^{′}$ among the K terminal devices corresponds to R S-SSBs, and the time slot ${TS}_{{UE}_{ID}^{′} , i}$ where the i-th S-SSB corresponding to the terminal device is located is:
${TS}_{{UE}_{ID}^{′} , i} = P 1 + \left⌊\left(i∗K+{UE}_{ID}^{′}\right)/P3\right⌋ ∗ P 2 ;$
where i is a natural number from 0 to R-1, and ${UE}_{ID}^{′} ∈ \left[0,1,…,K-1\right]$.

Optionally, each time slot within the first time period includes multiple symbols, and the symbol position $S - {SSB}_{{UE}_{ID}^{′} , i}$ corresponding to the i-th S-SSB of the terminal device with the mapped ID ${UE}_{ID}^{′}$ is:
$S - {SSB}_{{UE}_{ID}^{′} , i} = 1 + γ ∗ \left(i∗K+{UE}_{ID}^{′}\right) mod \left(P3\right) ;$
where γ represents the number of symbols occupied by a single S-SSB within the time slot.

Optionally, the first sidelink signal is one or more of the following: S-SSB, S-PSS, and S-SSS, sidelink channel state information reference signal, and demodulation reference signal.

Fig. 11 is a schematic structural view of a communication device in the embodiments of the present application. The dashed line in Fig. 11 indicates that the unit or module is optional. The device 1100 can be configured to implement the method described in the above method embodiments. The device 1100 may be a chip, or terminal device.

The device 1100 may include one or more processors 1110. The processor 1110 can support the device 1100 to implement the method described in the previous method embodiments. The processor 1110 may be a general-purpose processor or a dedicated processor. For example, the processor may be a central processing unit (CPU). Alternatively, the processor may also be other general-purpose processor, digital signal processor (DSP), application specific integrated circuits (ASIC), field programmable gate array (FPGA) or other programmable logic device, discrete gate or transistor logic device, discrete hardware component, etc. The general-purpose processor may be a microprocessor or any conventional processor.

The device 1100 may also include one or more memories 1120. The memory 1120 stores a program that can be executed by the processor 1110, enabling the processor 1110 to perform the method described in the previous method embodiments. The memory 1120 may be independent of the processor 1110 or integrated into the processor 1110.

The device 1100 may also include a transceiver 1130. The processor 1110 may communicate with other devices or chips through the transceiver 1130. For example, the processor 1110 can exchange data with other devices or chips through the transceiver 1130.

The embodiments of the present application also provide a computer-readable storage medium for storing a program. The computer-readable storage medium can be applied to the terminal or network device provided in the embodiments of the present application, and the program stored therein enables the computer to execute the method executable by the terminal or network device in the embodiments of the present application.

The computer-readable storage medium can be any available medium that a computer can read, or a data storage device such as a server or data center that integrates one or more available media. The available medium may be magnetic medium (such as floppy disk, hard disk, magnetic tape), optical medium (such as digital video disc (DVD)), or semiconductor medium (such as solid state disk (SSD)).

The embodiments of the present application also provide a computer program product. The computer program product includes a program. The computer program product can be applied to the terminal or network device provided in the embodiments of the present application, and the program included therein enables the computer to execute the method executable by the terminal or network device in the embodiments of the present application.

In the above embodiments, the functional units can be fully or partially implemented through software, hardware, firmware, or any combination thereof. When implemented using software, the units can be fully or partially implemented in the form of a computer program product. The computer program product includes one or more computer instructions. When loading and executing the computer program instructions in a computer, all or part of the processes or functions described in the embodiments of the present application are generated. The computer may be a general-purpose computer, a dedicated computer, a computer network, or other programmable device. The computer instructions may be stored in a computer-readable storage medium or transmitted from one computer-readable storage medium to another. For example, the computer instructions may be transmitted from a website site, computer, server, or data center to another website site, computer, server, or data center via wired (such as coaxial cable, fiber optic, digital subscriber line (DSL)) or wireless (such as infrared, wireless, microwave, etc.) means.

The embodiments of the present application also provide a computer program. The computer program can be applied to the terminal or network device provided in the embodiments of the present application, and enables the computer to execute the method executable by the terminal or network device in the embodiments of the present application.

The terms "system" and "network" in the present application can be used interchangeably. In addition, the terms used in the present application are only for explaining the specific embodiments of the present application, and are not intended to limit the present application. The terms "first," "second," "third," and "fourth" used in the specification, claims, and accompanying drawings of the present application are intended to distinguish different objects and not to describe a specific order. In addition, the terms "include" and "have", as well as any variations thereof, are intended to cover nonexclusive inclusions.

In the embodiments of the present application, the term "indication" may be a direct indication, an indirect indication, or a representation of an associated relationship. For example, A indicates B, which may mean that A directly indicates B. For example, B can be obtained through A; which may also mean that A indirectly indicates B, for example, A indicates C, and B can be obtained through C; which may also mean that there is a correlation between A and B.

In the embodiments of the present application, the term "corresponding" may indicate a direct or indirect correspondence relationship between two objects, an association relationship between the two objects, or a relationship of indicating and being indicated, configuring and being configured.

In the embodiments of the present application, "being pre-defined" or "being pre-configured" can be implemented by pre-storing corresponding codes or tables in devices (for example, including terminal devices and network devices) or other ways that can be used for indicating relevant information. The specific implementation method therefor is not limited in the present application. For example, being pre-defined may refer to being defined in a protocol.

In the embodiments of the present application, the term "protocol" may refer to standard protocols in the field of communication, such as LTE protocol, NR protocol, and related protocols applied in future communication systems, which is not limited in the present application.

In the embodiments of the present application, determining B according to A does not mean determining B solely according to A, but mean that B can be determined according to A and/or other information.

The term "and/or" in the embodiments of the present application only describes the association relationship between related objects, indicating that there may exist three types of relationships. For example, A and/or B may cover the following three situations: A exists alone, A and B exist simultaneously, and B exists alone. In addition, the character "/" in this paper generally indicates that the related objects before and after the "/" are in an "or" relationship.

In the embodiments of the present application, the sequence numbers of the above processes do not imply the order of execution and should not constitute any limitation on the implementation process of the embodiments of the present application. The order of execution of each process should be determined by its function and internal logic.

In the several embodiments provided in the present application, it should be understood that the disclosed systems, devices, and methods can be implemented in other ways. For example, the device embodiments described above are only illustrative. For example, the division of units is only a division in accordance with logical function. In practical implementation, there may be other division methods. For example, multiple units or components may be combined or integrated into another system, or some features may be ignored or not executed. On the other hand, the mutual coupling or direct coupling or communication connection shown or discussed may be indirect coupling or communication connection through some interfaces, devices or units, which can be electrical, mechanical or in other forms.

The units described as separate components may or may not be physically separated, and the components shown as units may or may not be physical units, i.e., these components may be located in one place or distributed across multiple network units. Some or all of the units can be selected according to actual needs to achieve the purpose of the embodiments.

In addition, the functional units in various embodiments of the present application may be integrated into one processing unit, may physically exist separately, or, two or more of the functional units may be integrated into one unit.

The above only describes specific implementation of the present application, but the scope of protection of the present application is not limited thereto. Any skilled person familiar with the technical field can easily conceive changes or replacements within the technical scope disclosed by the present application. These changes or replacements should be covered in the scope of protection of the present application. Therefore, the scope of protection of the present application shall be subject to the scope of protection of the appended claims.

## Claims

1. A method for sidelink communication, comprising:
transmitting, by a first terminal device, a first sidelink signal via a first transmitting beam, wherein the first sidelink signal is used for initial beam pairing or sidelink establishment between the first terminal device and a second terminal device;
wherein the first sidelink signal is associated with first information, and the first information comprises one or more of:
identification (ID) of the first terminal device;
ID of the second terminal device;
ID of a terminal device group in which the second terminal device is located; and
priority of a communication service between the first terminal device and the second terminal device.

2. The method according to claim 1, wherein the second terminal device is any terminal device within the terminal device group, and the ID of the terminal device group is used to determine the ID of the second terminal device.

3. The method according to claim 2, wherein the ID of the terminal device group corresponds to the ID of the second terminal device, the ID of the terminal device group is a high-level ID or a protocol layer ID mapped from the high-level ID, and the ID of the second terminal device is a low-level ID.

4. The method according to any one of claims 1 to 3, wherein the first sidelink signal is a sidelink-synchronization signal block (S-SSB) which comprises sidelink synchronization signal (SLSS) ID, wherein the ID of the first terminal device is either the SLSS ID or determined through the SLSS ID.

5. The method according to claim 1, wherein if the first terminal device and the second terminal device correspond to different cells or network devices respectively, the ID of the first terminal device and the ID of the second terminal device comprise identification information of the cells or network devices.

6. The method according to any one of claims 1 to 5, wherein the first information is used to generate a first sequence corresponding to the first sidelink signal.

7. The method according to claim 6, wherein the first sidelink signal comprises sidelink-secondary synchronization signal (S-SSS), and the first sequence comprises a first S-SSS sequence, wherein a cyclic shift of the first S-SSS sequence is determined based on a first offset, and the first offset is determined according to the first information.

8. The method according to any one of claims 1 to 7, wherein the first transmitting beam is at least one beam among a plurality of transmitting beams within a first time period, and the plurality of transmitting beams are used for the first terminal device to transmit a plurality of sidelink signals comprising the first sidelink signal, wherein the plurality of sidelink signals correspond to the plurality of terminal devices comprising the second terminal device in a one-to-one correspondence.

9. The method according to claim 8, wherein the first time period is one of: a plurality of consecutive subframes, one subframe, a plurality of consecutive time slots, and one time slot.

10. The method according to claim 8, wherein the first time period comprises at least one time slot, and any one of the at least one time slot comprises a plurality of symbols, wherein a first symbol among the plurality of symbols is used to carry automatic gain control (AGC), and the other symbols except for the first symbol among the plurality of symbols are used to carry at least one guard interval (GAP) and the plurality of sidelink signals.

11. The method according to claim 8 or 10, wherein any one of the plurality of terminal devices corresponds to at least one sidelink signal, and a position index of the at least one sidelink signal corresponding to any terminal device within the first time period is determined based on one or more of
a number of the plurality of terminal devices;
a terminal device ID of any terminal device;
a number of the plurality of sidelink signals within the first time period; and
position information of the plurality of sidelink signals within the first time period.

12. The method according to claim 11, wherein the first time period comprises a plurality of consecutive subframes, the plurality of sidelink signals are a plurality of S-SSBs, and the position information comprises one or more of
first parameter, indicating a slot offset of a first S-SSB within the first time period;
second parameter, indicating a slot interval between two adjacent S-SSBs within the first time period;
third parameter, indicating a number of S-SSBs within a single time slot;
a number of subframes within the first time period; and
a number of time slots within a single subframe.

13. The method according to claim 12, wherein a plurality of transmitting beams within the first time period are used for the first terminal device to transmit S-SSBs to K terminal devices, wherein K is a positive integer, the number R of S-SSBs corresponding to any one of the K terminal devices is: $R = \left⌊\frac{L ∗ P 3}{K}\right⌋ ;$ wherein $\left⌊⋅\right⌋$ is a floor function, $L = \left⌊\frac{X ∗ N - P 1}{P 2}\right⌋$, wherein X represents the number of time slots per subframe, N represents the number of subframes within the first time period, P1 represents the first parameter, P2 represents the second parameter, and P3 represents the third parameter.

14. The method according to claim 12, wherein a plurality of transmitting beams within the first time period are used for the first terminal device to transmit S-SSBs to K terminal devices, wherein the first time period comprises a plurality of time slots, a terminal device with a mapped ID of ${UE}_{ID}^{′}$ among the K terminal devices corresponds to R S-SSBs, and the time slot ${TS}_{{UE}_{ID}^{′} , i}$ wherein the i-th S-SSB corresponding to the terminal device with the mapped ID of ${UE}_{ID}^{′}$ is located is: ${TS}_{{UE}_{ID}^{′} , i} = P 1 + \left⌊\left(i∗K+{UE}_{ID}^{′}\right)/P3\right⌋ ∗ P 2 ;$ wherein i is a natural number from 0 to R-1, and ${UE}_{ID}^{′} ∈ \left[0,1,…,K-1\right]$.

15. The method according to claim 14, wherein each time slot within the first time period comprises a plurality of symbols, and a symbol position $S - {SSB}_{{UE}_{ID}^{′} , i}$ corresponding to the i-th S-SSB of the terminal device with the mapped ID ${UE}_{ID}^{′}$ is: $S - {SSB}_{{UE}_{ID}^{′} , i} = 1 + γ ∗ \left(i∗K+{UE}_{ID}^{′}\right) mod \left(P3\right) ;$ wherein γ represents a number of symbols occupied by a single S-SSB within the time slot.

16. The method according to any one of claims 1 to 15, wherein the first sidelink signal is one or more of S-SSB, S-PSS, and S-SSS, sidelink channel state information reference signal, and demodulation reference signal.

17. A method for sidelink communication, comprising:
receiving, by a second terminal device, a first sidelink signal transmitted by a first terminal device via a first transmitting beam, wherein the first sidelink signal is used for initial beam pairing or sidelink establishment between the first terminal device and the second terminal device;
wherein the first sidelink signal is associated with first information, and the first information comprises one or more of:
identification (ID) of the first terminal device;
ID of the second terminal device;
ID of a terminal device group in which the second terminal device is located; and
priority of a communication service between the first terminal device and the second terminal device.

18. The method according to claim 17, wherein the second terminal device is any terminal device within the terminal device group, and the ID of the terminal device group is used to determine the ID of the second terminal device.

19. The method according to claim 18, wherein the ID of the terminal device group corresponds to the ID of the second terminal device, the ID of the terminal device group is a high-level ID or a protocol layer ID mapped from the high-level ID, and the ID of the second terminal device is a low-level ID.

20. The method according to any one of claims 17 to 19, wherein the first sidelink signal is a sidelink-synchronization signal block (S-SSB) which comprises sidelink synchronization signal (SLSS) ID, wherein the ID of the first terminal device is either the SLSS ID or determined through the SLSS ID.

21. The method according to claim 17, wherein if the first terminal device and the second terminal device correspond to different cells or network devices respectively, the ID of the first terminal device and the ID of the second terminal device comprise identification information of the cells or network devices.

22. The method according to any one of claims 17 to 21, wherein the first information is used to generate a first sequence corresponding to the first sidelink signal.

23. The method according to claim 22, wherein the first sidelink signal comprises sidelink-secondary synchronization signal (S-SSS), and the first sequence comprises a first S-SSS sequence, wherein a cyclic shift of the first S-SSS sequence is determined based on a first offset, and the first offset is determined according to the first information.

24. The method according to any one of claims 17 to 23, wherein the first transmitting beam is at least one beam among a plurality of transmitting beams within a first time period, and the plurality of transmitting beams are used for the first terminal device to transmit a plurality of sidelink signals comprising the first sidelink signal, wherein the plurality of sidelink signals correspond to the plurality of terminal devices comprising the second terminal device in a one-to-one correspondence.

25. The method according to claim 24, wherein the first time period is one of: a plurality of consecutive subframes, one subframe, a plurality of consecutive time slots, and one time slot.

26. The method according to claim 24, wherein the first time period comprises at least one time slot, and any one of the at least one time slot comprises a plurality of symbols, wherein a first symbol among the plurality of symbols is used to carry automatic gain control (AGC), and the other symbols except for the first symbol among the plurality of symbols are used to carry at least one guard interval (GAP) and the plurality of sidelink signals.

27. The method according to claim 24 or 26, wherein any one of the plurality of terminal devices corresponds to at least one sidelink signal, and a position index of the at least one sidelink signal corresponding to any terminal device within the first time period is determined based on one or more of
a number of the plurality of terminal devices;
a terminal device ID of any terminal device;
a number of the plurality of sidelink signals within the first time period; and
position information of the plurality of sidelink signals within the first time period.

28. The method according to claim 27, wherein the first time period comprises a plurality of consecutive subframes, the plurality of sidelink signals are a plurality of S-SSBs, and the position information comprises one or more of
first parameter, indicating a slot offset of a first S-SSB within the first time period; second parameter, indicating a slot interval between two adjacent S-SSBs within the first time period;
third parameter, indicating a number of S-SSBs within a single time slot;
a number of subframes within the first time period; and
a number of time slots within a single subframe.

29. The method according to claim 28, wherein a plurality of transmitting beams within the first time period are used for the first terminal device to transmit S-SSBs to K terminal devices, wherein K is a positive integer, the number R of S-SSBs corresponding to any one of the K terminal devices is: $R = \left⌊\frac{L ∗ P 3}{K}\right⌋ ;$ wherein $\left⌊⋅\right⌋$ is a floor function, $L = \left⌊\frac{X ∗ N - P 1}{P 2}\right⌋$, wherein X represents the number of time slots per subframe, N represents the number of subframes within the first time period, P1 represents the first parameter, P2 represents the second parameter, and P3 represents the third parameter.

30. The method according to claim 28, wherein a plurality of transmitting beams within the first time period are used for the first terminal device to transmit S-SSBs to K terminal devices, wherein the first time period comprises a plurality of time slots, a terminal device with a mapped ID of ${UE}_{ID}^{′}$ among the K terminal devices corresponds to R S-SSBs, and the time slot ${TS}_{{UE}_{ID}^{′} , i}$ where the i-th S-SSB corresponding to the terminal device with the mapped ID of ${UE}_{ID}^{′}$ is located is: ${TS}_{{UE}_{ID}^{′} , i} = P 1 + \left⌊\left(i∗K+{UE}_{ID}^{′}\right)/P3\right⌋ ∗ P 2 ;$ wherein i is a natural number from 0 to R-1, and ${UE}_{ID}^{′} ∈ \left[0,1,…,K-1\right]$.

31. The method according to claim 30, wherein each time slot within the first time period comprises a plurality of symbols, and a symbol position $S - {SSB}_{{UE}_{ID}^{′} , i}$ corresponding to the i-th S-SSB of the terminal device with the mapped ID ${UE}_{ID}^{′}$ is: $S - {SSB}_{{UE}_{ID}^{′} , i} = 1 + γ ∗ \left(i∗K+{UE}_{ID}^{′}\right) mod \left(P3\right) ;$ wherein y represents a number of symbols occupied by a single S-SSB within the time slot.

32. The method according to any one of claims 17 to 31, wherein the first sidelink signal is one or more of S-SSB, S-PSS, and S-SSS, sidelink channel state information reference signal, and demodulation reference signal.

33. A device for sidelink communication, wherein the device is a first terminal device, and the first terminal device comprises:
a transmitting unit, configured to transmit a first sidelink signal via a first transmitting beam, wherein the first sidelink signal is used for initial beam pairing or sidelink establishment between the first terminal device and a second terminal device;
wherein the first sidelink signal is associated with first information, and the first information comprises one or more of:
identification (ID) of the first terminal device;
ID of the second terminal device;
ID of a terminal device group in which the second terminal device is located; and
priority of a communication service between the first terminal device and the second terminal device.

34. The device according to claim 33, wherein the second terminal device is any terminal device within the terminal device group, and the ID of the terminal device group is used to determine the ID of the second terminal device.

35. The device according to claim 34, wherein the ID of the terminal device group corresponds to the ID of the second terminal device, the ID of the terminal device group is a high-level ID or a protocol layer ID mapped from the high-level ID, and the ID of the second terminal device is a low-level ID.

36. The device according to any one of claims 33 to 35, wherein the first sidelink signal is a sidelink-synchronization signal block (S-SSB) which comprises sidelink synchronization signal (SLSS) ID, wherein the ID of the first terminal device is either the SLSS ID or determined through the SLSS ID.

37. The device according to claim 33, wherein if the first terminal device and the second terminal device correspond to different cells or network devices respectively, the ID of the first terminal device and the ID of the second terminal device comprise identification information of the cells or network devices.

38. The device according to any one of claims 33 to 37, wherein the first information is used to generate a first sequence corresponding to the first sidelink signal.

39. The device according to claim 38, wherein the first sidelink signal comprises sidelink-secondary synchronization signal (S-SSS), and the first sequence comprises a first S-SSS sequence, wherein a cyclic shift of the first S-SSS sequence is determined based on a first offset, and the first offset is determined according to the first information.

40. The device according to any one of claims 33 to 39, wherein the first transmitting beam is at least one beam among a plurality of transmitting beams within a first time period, and the plurality of transmitting beams are used for the first terminal device to transmit a plurality of sidelink signals comprising the first sidelink signal, wherein the plurality of sidelink signals correspond to the plurality of terminal devices comprising the second terminal device in a one-to-one correspondence.

41. The device according to claim 40, wherein the first time period is one of: a plurality of consecutive subframes, one subframe, a plurality of consecutive time slots, and one time slot.

42. The device according to claim 40, wherein the first time period comprises at least one time slot, and any one of the at least one time slot comprises a plurality of symbols, wherein a first symbol among the plurality of symbols is used to carry automatic gain control (AGC), and the other symbols except for the first symbol among the plurality of symbols are used to carry at least one guard interval (GAP) and the plurality of sidelink signals.

43. The device according to claim 40 or 42, wherein any one of the plurality of terminal devices corresponds to at least one sidelink signal, and a position index of the at least one sidelink signal corresponding to any terminal device within the first time period is determined based on one or more of
a number of the plurality of terminal devices;
a terminal device ID of any terminal device;
a number of the plurality of sidelink signals within the first time period; and
position information of the plurality of sidelink signals within the first time period.

44. The device according to claim 43, wherein the first time period comprises a plurality of consecutive subframes, the plurality of sidelink signals are a plurality of S-SSBs, and the position information comprises one or more of
first parameter, indicating a slot offset of a first S-SSB within the first time period; second parameter, indicating a slot interval between two adjacent S-SSBs within the first time period;
third parameter, indicating a number of S-SSBs within a single time slot;
a number of subframes within the first time period; and
a number of time slots within a single subframe.

45. The device according to claim 44, wherein a plurality of transmitting beams within the first time period are used for the first terminal device to transmit S-SSBs to K terminal devices, wherein K is a positive integer, the number R of S-SSBs corresponding to any one of the K terminal devices is: $R = \left⌊\frac{L ∗ P 3}{K}\right⌋ ;$ wherein $\left⌊⋅\right⌋$ is a floor function, $L = \left⌊\frac{X ∗ N - P 1}{P 2}\right⌋$, wherein X represents the number of time slots per subframe, N represents the number of subframes within the first time period, P1 represents the first parameter, P2 represents the second parameter, and P3 represents the third parameter.

46. The device according to claim 44, wherein a plurality of transmitting beams within the first time period are used for the first terminal device to transmit S-SSBs to K terminal devices, wherein the first time period comprises a plurality of time slots, a terminal device with a mapped ID of ${UE}_{ID}^{′}$ among the K terminal devices corresponds to R S-SSBs, and the time slot ${TS}_{{UE}_{ID}^{′} , i}$ where the i-th S-SSB corresponding to the terminal device with the mapped ID of ${UE}_{ID}^{′}$ is located is: ${TS}_{{UE}_{ID}^{′} , i} = P 1 + \left⌊\left(i∗K+{UE}_{ID}^{′}\right)/P3\right⌋ ∗ P 2 ;$ wherein i is a natural number from 0 to R-1, and ${UE}_{ID}^{′} ∈ \left[0,1,…,K-1\right]$.

47. The device according to claim 46, wherein each time slot within the first time period comprises a plurality of symbols, and a symbol position $S - {SSB}_{{UE}_{ID}^{′} , i}$ corresponding to the i-th S-SSB of the terminal device with the mapped ID ${UE}_{ID}^{′}$ is: $S - {SSB}_{{UE}_{ID}^{′} , i} = 1 + γ ∗ \left(i∗K+{UE}_{ID}^{′}\right) mod \left(P3\right) ;$ wherein y represents a number of symbols occupied by a single S-SSB within the time slot.

48. The device according to any one of claims 33 to 47, wherein the first sidelink signal is one or more of S-SSB, S-PSS, and S-SSS, sidelink channel state information reference signal, and demodulation reference signal.

49. A device for sidelink communication, wherein the device is a second terminal device comprising:
a receiving unit, configured to receive a first sidelink signal transmitted by a first terminal device via a first transmitting beam, wherein the first sidelink signal is used for initial beam pairing or sidelink establishment between the first terminal device and the second terminal device;
wherein the first sidelink signal is associated with first information, and the first information comprises one or more of:
identification (ID) of the first terminal device;
ID of the second terminal device;
ID of a terminal device group in which the second terminal device is located; and
priority of a communication service between the first terminal device and the second terminal device.

50. The device according to claim 49, wherein the second terminal device is any terminal device within the terminal device group, and the ID of the terminal device group is used to determine the ID of the second terminal device.

51. The device according to claim 50, wherein the ID of the terminal device group corresponds to the ID of the second terminal device, the ID of the terminal device group is a high-level ID or a protocol layer ID mapped from the high-level ID, and the ID of the second terminal device is a low-level ID.

52. The device according to any one of claims 49 to 50, wherein the first sidelink signal is a sidelink-synchronization signal block (S-SSB) which comprises sidelink synchronization signal (SLSS) ID, wherein the ID of the first terminal device is either the SLSS ID or determined through the SLSS ID.

53. The device according to claim 49, wherein if the first terminal device and the second terminal device correspond to different cells or network devices respectively, the ID of the first terminal device and the ID of the second terminal device comprise identification information of the cells or network devices.

54. The device according to any one of claims 49 to 53, wherein the first information is used to generate a first sequence corresponding to the first sidelink signal.

55. The device according to claim 54, wherein the first sidelink signal comprises sidelink-secondary synchronization signal (S-SSS), and the first sequence comprises a first S-SSS sequence, wherein a cyclic shift of the first S-SSS sequence is determined based on a first offset, and the first offset is determined according to the first information.

56. The device according to any one of claims 49 to 55, wherein the first transmitting beam is at least one beam among a plurality of transmitting beams within a first time period, and the plurality of transmitting beams are used for the first terminal device to transmit a plurality of sidelink signals comprising the first sidelink signal, wherein the plurality of sidelink signals correspond to the plurality of terminal devices comprising the second terminal device in a one-to-one correspondence.

57. The device according to claim 56, wherein the first time period is one of: a plurality of consecutive subframes, one subframe, a plurality of consecutive time slots, and one time slot.

58. The device according to claim 56, wherein the first time period comprises at least one time slot, and any one of the at least one time slot comprises a plurality of symbols, wherein a first symbol among the plurality of symbols is used to carry automatic gain control (AGC), and the other symbols except for the first symbol among the plurality of symbols are used to carry at least one guard interval (GAP) and the plurality of sidelink signals.

59. The device according to claim 56 or 58, wherein any one of the plurality of terminal devices corresponds to at least one sidelink signal, and a position index of the at least one sidelink signal corresponding to any terminal device within the first time period is determined based on one or more of
a number of the plurality of terminal devices;
a terminal device ID of any terminal device;
a number of the plurality of sidelink signals within the first time period; and
position information of the plurality of sidelink signals within the first time period.

60. The device according to claim 59, wherein the first time period comprises a plurality of consecutive subframes, the plurality of sidelink signals are a plurality of S-SSBs, and the position information comprises one or more of
first parameter, indicating a slot offset of a first S-SSB within the first time period; second parameter, indicating a slot interval between two adjacent S-SSBs within the first time period;
third parameter, indicating a number of S-SSBs within a single time slot;
a number of subframes within the first time period; and
a number of time slots within a single subframe.

61. The device according to claim 60, wherein a plurality of transmitting beams within the first time period are used for the first terminal device to transmit S-SSBs to K terminal devices, wherein K is a positive integer, the number R of S-SSBs corresponding to any one of the K terminal devices is: $R = \left⌊\frac{L ∗ P 3}{K}\right⌋ ;$ wherein $\left⌊⋅\right⌋$ is a floor function, $L = \left⌊\frac{X ∗ N - P 1}{P 2}\right⌋$, wherein X represents the number of time slots per subframe, N represents the number of subframes within the first time period, P1 represents the first parameter, P2 represents the second parameter, and P3 represents the third parameter.

62. The device according to claim 60, wherein a plurality of transmitting beams within the first time period are used for the first terminal device to transmit S-SSBs to K terminal devices, wherein the first time period comprises a plurality of time slots, a terminal device with a mapped ID of ${UE}_{ID}^{′}$ among the K terminal devices corresponds to R S-SSBs, and the time slot ${TS}_{{UE}_{ID}^{′} , i}$ where the i-th S-SSB corresponding to the terminal device with the mapped ID of ${UE}_{ID}^{′}$ is located is: ${TS}_{{UE}_{ID}^{′} , i} = P 1 + \left⌊\left(i∗K+{UE}_{ID}^{′}\right)/P3\right⌋ ∗ P 2 ;$ wherein i is a natural number from 0 to R-1, and ${UE}_{ID}^{′} ∈ \left[0,1,…,K-1\right]$.

63. The device according to claim 62, wherein each time slot within the first time period comprises a plurality of symbols, and a symbol position $S - {SSB}_{{UE}_{ID}^{′} , i}$ corresponding to the i-th S-SSB of the terminal device with the mapped ID ${UE}_{ID}^{′}$ is: $S - {SSB}_{{UE}_{ID}^{′} , i} = 1 + γ ∗ \left(i∗K+{UE}_{ID}^{′}\right) mod \left(P3\right) ;$ wherein γ represents a number of symbols occupied by a single S-SSB within the time slot.

64. The device according to any one of claims 49 to 63, wherein the first sidelink signal is one or more of S-SSB, S-PSS, and S-SSS, sidelink channel state information reference signal, and demodulation reference signal.

65. A communication device, comprising a memory and a processor, wherein the memory is configured to store a program, and the processor is configured to call the program in the memory to implement the method according to any one of claims 1 to 32.

66. A device, comprising a processor configured to call a program from a memory to implement the method according to any one of claims 1 to 32.

67. A chip, comprising a processor configured to call a program from a memory to cause a device installed with the chip to implement the method according to any one of claims 1 to 32.

68. A computer-readable storage medium, wherein a program is stored thereon, and the program causes a computer to implement the method according to any one of claims 1 to 32.

69. A computer program product, comprising a program, wherein the program causes a computer to implement the method according to any one of claims 1 to 32.

70. A computer program, wherein the computer program causes a computer to implement the method according to any one of claims 1 to 32.
